Europäisches Patentamt

European Patent Office

Office européen des brevets

(19)

(11) Numéro de publication: **0 218 499**
**B1**

(12) **FASCICULE DE BREVET EUROPEEN**

(45) Date de publication du fascicule du brevet:
**10.01.90**

(51) Int. Cl.⁴: **H04J 3/16**

(21) Numéro de dépôt: **86401945.0**

(22) Date de dépôt: **04.09.86**

(54) **Equipements de multiplexage et démultiplexage pour liaison numérique synchrone à débit et rapidité de modulation variables.**

(30) Priorité: **12.09.85 FR 8513553**

(43) Date de publication de la demande:
**15.04.87 Bulletin 87/16**

(45) Mention de la délivrance du brevet:
**10.01.90 Bulletin 90/2**

(84) Etats contractants désignés:
**DE GB IT NL SE**

(56) Documents cités:
**EP-A- 0 068 595**
**FR-A- 2 206 544**
**US-A- 3 700 820**

**NACHRICHTENTECHNISCHE ZEITSCHRIFT N.T.Z.,
vol. 38, no.6.
juin 1985, pages 414-416,418 et 420, Offenbach, DE; M.
WINTER: "ISDN - Evolution des Fernsprechnetzes"**

(73) Titulaire: **Coatanea, Pierre, Ker Noel Saint Quay Perros,
F-22700 Perros Guirec(FR)**
Titulaire: **Tarridec, André, Lanrududu, F-22700 Perros
Guirec(FR)**

(72) Inventeur: **Coatanea, Pierre, Ker Noel Saint Quay Perros,
F-22700 Perros Guirec(FR)**
Inventeur: **Tarridec, André, Lanrududu, F-22700 Perros
Guirec(FR)**

(74) Mandataire: **Martinet & Lapoux, 62, rue des Mathurins,
F-75008 Paris(FR)**

## Description

La présente invention concerne des équipements de multiplexage et démultiplexage dans des stations aux extrémités d'une liaison numérique synchrone bidirectionnelle dans laquelle l'un des signaux multiplexés offre un débit variable à la demande de l'une des stations et où le signal résultant transmis en ligne présente une rapidité de modulation variable fonction du débit demandé. Plus généralement, l'invention fait appel aux techniques de multiplexage et démultiplexage à division du temps de signaux numériques ayant des fréquences de rythme constantes différentes entre elles dans un rapport variable, et aux techniques de base de temps et de récupération d'horloge programmables et de signalisation par messages entre stations.

L'évolution des réseaux numériques locaux conduit à relier de nombreux terminaux de différents types à un réseau numérique à intégration de services (RNIS) à travers une régie d'abonné. En particulier, les terminaux demandent des débits très différents suivant les deux sens de transmission en fonction des tâches à accomplir.

Actuellement, la régie d'abonné affecte une liaison numérique spécifique à chacun des terminaux, la liaison ayant un débit constant fixée une fois pour toute en fonction du débit utilisé par le terminal. Lorsqu'au cours de tâches accomplies par le terminal, celui-ci doit transmettre ou recevoir une faible quantité d'information comparativement au débit offert par la liaison, il apparaît en outre une consommation énergétique élevée comparativement à celle strictement nécessaire à la transmission des informations. De plus, lorsqu'un terminal doit être remplacé par un terminal plus performant ayant un débit différent, ou par un terminal d'un autre type suite à une nouvelle répartition géographique des terminaux chez l'abonné, il est nécessaire de modifier les interfaces de liaison entre régie et terminaux afin de les rendre compatibles avec les débits des nouveaux terminaux.

La présente invention vise à obvier aux inconvénients précités en fournissant des interfaces banalisées entre la régie d'abonné et les terminaux. En d'autres termes, l'invention vise à permettre le branchement de n'importe quel terminal, quels que soient les débits qu'il demande suivant les deux sens de transmission, à n'importe lequel des accès terminaux de la régie, qui sont aussi eux aussi banalisés. Plus particulièrement, l'invention a pour but la conception d'un équipement de multiplexage et d'un équipement de démultiplexage à inclure dans un accès banalisé de la régie ou d'un terminal afin que chaque terminal puisse définir dynamiquement les débits utilisés suivant chacun des deux sens de transmission et que le signal résultant transmis en ligne présente pour chaque sens une rapidité de modulation adaptée au débit utilisé.

Le choix dynamique des débits a pour conséquence de permettre une réduction de la consommation énergétique, en utilisant un débit faible notamment lors d'échanges de signalisations préalablement à tout échange d'informations à débit élevé.

De plus, la banalisation des accès permet de standardiser les interfaces aussi bien dans la régie que dans les terminaux et corollairement, de réduire le coût de celles-ci.

La présente invention vise également à offrir une bonne compatabilité avec l'interface abonné-réseau typiquement à un débit de base 192 kbit/s définie par le Comité Consultatif International Télégraphique et Téléphonique (CCITT) dans les avis I430, I440/Q920 et I451/Q930. Cette interface abonné-réseau offre dans le sens terminal vers régie, trois canaux à débits fixes B1 à 64 kbit/s, B2 à 64 kbit/s et D à 16 kbit/s et des canaux auxiliaires à un débit cumulé de 48 kbit/s, et dans le sens régie vers terminal, trois canaux B1, B2 et D aux débits fixes précités plus un canal d'écho E à 16 kbit/s et des canaux auxiliaires à un débit cumulé de 32 kbit/s. Cette interface offre aussi dans le canal D un protocole de signalisation permettant un dialogue par messages entre terminal et régie.

L'interface selon l'invention a la même structure de canaux que l'interface définie par le CCITT, mais le canal B2 offre un débit variable de Nx64 kbit/s, où N est un nombre compris entre 1 et 1250 ou plus encore. L'interface se présente sous la forme d'un multiplex de canaux à débit constant de valeur totale $64 + 16 + 48 = 128$ kbit/s et d'un canal à débit variable de valeur Nx64 kbit/s.

Selon l'invention, un équipement du multiplexage pour multiplexer un premier signal numérique ayant une première fréquence de rythme constante avec un signal numérique ayant une seconde fréquence de rythme en un signal numérique résultant ayant une fréquence de rythme égale à la somme des première et seconde fréquences de rythme et structuré en trames récurrentes ayant une période prédéterminée, comprenant des premiers moyens pour mémoriser des bits consécutifs du premier signal reçus pendant une période de trame, des premiers moyens pour écrire les bits reçus du premier signal dans les premiers moyens pour mémoriser au rythme de la première fréquence, des moyens pour lire les bits écrits du premier signal à la fréquence de rythme du signal résultant, des seconds moyens pour mémoriser des bits du second signal reçus pendant au plus une période de trame, des seconds moyens pour écrire les bits reçus du second signal dans les seconds moyens pour mémoriser au rythme de la seconde fréquence, et des moyens pour lire les bits écrits du second signal à la fréquence de rythme du signal résultant, et des moyens d'émission et de transcodage du signal résultant en un signal en ligne, est caractérisé en ce que le premier signal numérique convoie une information de changement de fréquence de rythme du second signal numérique, en ce que chaque trame du signal résultant comprend un nombre de bits constant du premier signal numérique égal au produit constant de la première fréquence de rythme par la période de trame quelle que soit la fréquence de rythme variable du second signal numérique, et un nombre de bits variable du second signal numérique égal au produit de la seconde fréquence de rythme variable par la période de trame, la fréquence de rythme du signal résultant étant variable et égale à la somme de la première fréquence de rythme constante et de la seconde fréquence de rythme variable, et en ce que l'équipement de multiplexage comprend des moyens pour détecter l'information de changement de fréquence de rythme, et des moyens programmables en fonction de l'information de changement de fréquence de rythme détectée pour produire au moins un signal d'horloge à la fréquence de rythme variable du signal résultant à appliquer aux moyens pour lire et un signal d'horloge correspondant à une rapidité de modulation variable du signal en ligne à appliquer aux moyens d'émission et de transcodage.

Toujours selon l'invention, un équipement de démultiplexage pour démultiplexer un signal numérique résultant ayant une fréquence de rythme et structuré en trames récurrentes ayant une période prédéterminée en un premier signal numérique ayant une première fréquence de rythme constante et un second signal numérique ayant une seconde fréquence de rythme, comprenant des moyens de réception et de transcodage d'un signal en ligne en ledit signal résultant, des moyens pour mémoriser des bits reçus du premier signal inclus dans le signal résultant pendant une période de trame, des moyens pour écrire les bits reçus du premier signal dans les moyens pour mémoriser au rythme de la fréquence du signal résultant, des moyens pour lire les bits écrits du premier signal à la première fréquence, et des moyens pour extraire des bits reçus du second signal inclus dans le signal résultant et les retransmettre à la seconde fréquence de rythme, est caractérisé en ce que le premier signal numérique convoie une information de changement de fréquence de rythme du second signal numérique, en ce que chaque trame du signal résultant comprend un nombre de bits constant du premier signal numérique égal au produit constant de la première fréquence de rythme par la période de trame quelle que soit la fréquence de rythme variable du second signal numérique, et un nombre de bits variable du second signal numérique égal au produit de la seconde fréquence de rythme variable par la période de trame, la fréquence de rythme du signal résultant étant variable et égale à la somme de la première fréquence de rythme constante et de la seconde fréquence de rythme variable, et en ce que l'équipement de démultiplexage comprend des moyens pour détecter l'information de changement de fréquence de rythme, des moyens programmables en fonction de l'information de changement de fréquence de rythme détectée pour produire au moins un signal d'horloge à la fréquence de rythme variable du signal résultant à appliquer aux moyens pour écrire et aux moyens pour extraire et un signal d'horloge correspondant à une rapidité de modulation variable du signal en ligne à appliquer aux moyens de réception et de transcodage.

Dans une liaison numérique synchrone bidirectionnelle à débit et rapidité de modulation variables selon l'invention, destinée à banaliser l'interface entre une première station, telle qu'un accès de régie d'abonné, et une seconde station, telle qu'un terminal, chacune des stations comprend un équipement de multiplexage et un équipement de démultiplexage selon l'invention.

Dans cette réalisation particulière, la liaison peut offrir trois états. A un état inactif, aucun signal n'est transmis à travers la liaison et les deux stations sont en veille. L'une des stations peut alors transmettre un message de commande d'activation, traduite par la présence d'un signal dans la liaison, qui "réveille" l'autre station. Les deux stations passent alors dans un état de bas permettant d'échanger des messages à un débit de base prédéterminé, définissant un débit minimal des seconds signaux numériques à débit variable. Par l'intermédiaire des premiers signaux numériques à debit constant, l'une ou l'autre des stations peut demander un changement de débit suivant l'une et/ou l'autre directions de transmission dans la liaison, en transmettant une demande de changement de débit accompagné de la valeur du nouveau débit vers l'autre station. Après avoir accusé réception de la demande de changement de débit selon un protocole d'échange de messages préétabli, la station maîtresse effectue le changement de débit tandis que l'autre station se synchronise avec celle-ci.

Puis les deux stations peuvent procéder à de nouveaux changements de débit directement, sans revenir à l'état de base, ou indirectement, en revenant à l'état de base, par exemple lorsque le flot des données à transmettre est intermittent.

Dans tous les états, les stations peuvent revenir à l'état inactif par un échange de messages de commande de désactivation.

Par ailleurs, il est à noter que les opérations de multiplexage et démultiplexage sont fondées sur une structure de trame dans laquelle la répartition des bits du premier signal à fréquence de rythme constante et des bits du second signal à fréquence de rythme variable demeure inchangée, seules les durées de champs de bits affectés à ces signaux dans la trame variant en fonction du débit du second signal.

D'autres caractéristiques et avantages de l'invention apparaîtront plus clairement à la lecture de la description suivante de plusieurs réalisations de l'invention en référence aux dessins annexés correspondants dans lesquels :

- la Fig.1 est un bloc-diagramme schématique d'une liaison numérique synchrone bidirectionnelle à débit et rapidité de modulation variables entre des équipements de multiplexage et de démultiplexage de deux stations selon l'invention ;
- les Figs.2 et 3 sont des diagrammes temporels montrant deux trames pour des directions de transmission opposées dans la liaison ainsi que des signaux et adresses pour obtenir ces trames lorsque la liaison est à un débit de base minimal, respectivement ;
- les Figs.4 et 5 sont des diagrammes temporels montrant deux trames pour des directions de transmission opposées dans la liaison ainsi que des signaux et adresses pour obtenir ces trames lorsque la liaison est à un débit supérieur au débit de base, typiquement égal au double de celui-ci, respectivement ;
- la Fig.6 est un bloc-diagramme d'une base de temps programmable dans l'une des stations ;

- la Fig.7 est un bloc-diagramme d'un récupérateur d'horloge programmable dans l'une des stations;
- la Fig.8 est un bloc-diagramme d'un multiplexeur programmable dans l'une des stations ; et
- la Fig.9 est un bloc-diagramme d'un démultiplexeur programmable dans l'une des stations.

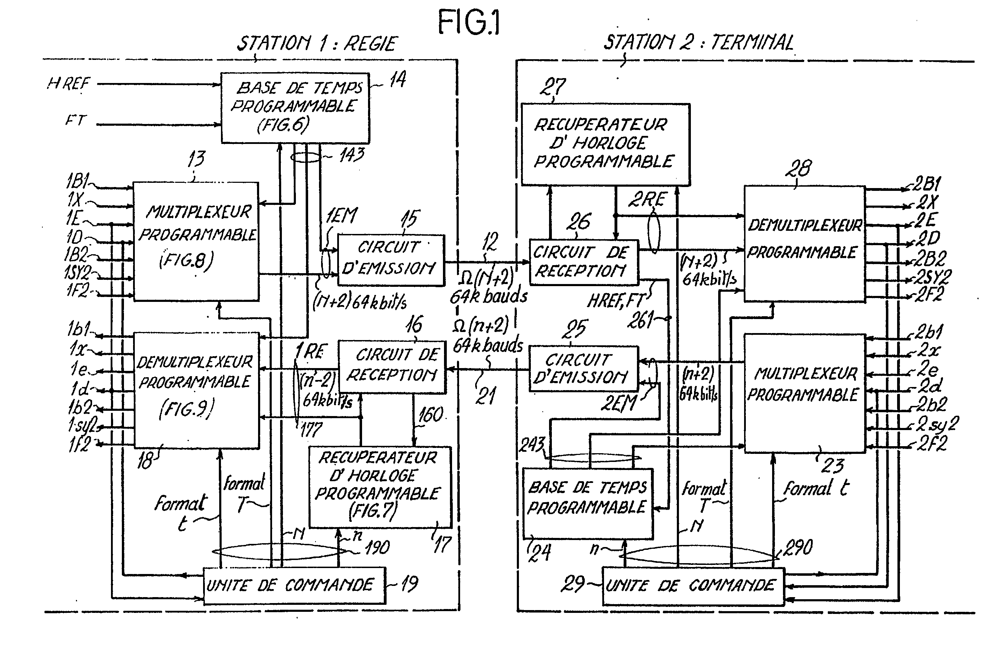

Dans la Fig.1 est représentée une liaison numérique synchrone bidirectionnelle à débit et rapidité de modulation variables entre deux stations d'extrémité 1 et 2. La liaison comprend deux supports de transmission 12 et 21, tels que fibres optiques ou câbles coaxiaux à large bande, affectés respectivement à la transmission de premiers canaux numériques multiplexés de la station 1 vers la station 2 et à la transmission de seconds canaux numériques multiplexés de la station 2 vers la station 1.

Afin de fixer les idées, il est supposé que la station 1 est une régie d'abonné multiservices reliée d'une part, à un réseau numérique commuté général du type à intégration de service (RNIS), à travers une ligne numérique d'abonné, d'autre part, à plusieurs stations 2 constituant des terminaux à interface numérique dans une installation d'abonné ou dans un réseau local d'entreprise, à travers des liaisons, identiques à la liaison 1-2, formant un réseau en étoile. Chaque terminal peut comprendre un poste de télévision, un magnétoscope, un récepteur haute fidélité, un magnétophone, un poste téléphonique numérique, un terminal vidéotex, un télécopieur ayant différentes rapidités de modulation, un visiophone, un terminal audiovidéotex, un terminal de téléécriture ou un terminal de télétex tel que machine de traitement de texte, par exemple. Tous ces terminaux présentent par nature des débits de transmission et de réception de données différents entre eux. Cependant, selon l'invention, chaque liaison 1-2 est véritablement banalisée, en ce sens qu'elle constitue une interface numérique pour relier n'importe lequel des terminaux précédents à la station1 quels que soient les débits des informations à transmettre et à recevoir. Une telle banalisation de liaison est réalisée grâce à deux ensembles analogues d'équipements de multiplexage et de démultiplexage inclus respectivement dans la station 1 et la station 2 et reliés par la liaison 1-2. Les deux ensembles d'équipements, objets de l'invention, sont réprésentés schématiquement dans la Fig.1. Par contre, d'autres circuits inclus dans la station 1 et propres à traîter les canaux numériques assignés respectivement aux liaisons 1-2 suivant les deux sens de transmission en vue de connecter chaque terminal au réseau commuté ou à un autre terminal, et d'autres circuits inclus dans chaque terminal, tel que la station 2, accomplissant des fonctions inhérentes au terminal n'appartiennent pas au cadre de l'invention et ne sont pas décrits dans la suite.

La banalisation de la liaison 1-2 est fondée sur des multiplexages à division du temps de canaux numériques suivant les deux sens de transmission que présentent des structures de trame T et t stables ayant certains intervalles de temps "élastiques" pendant une période de trame typiquement de 250 µs.

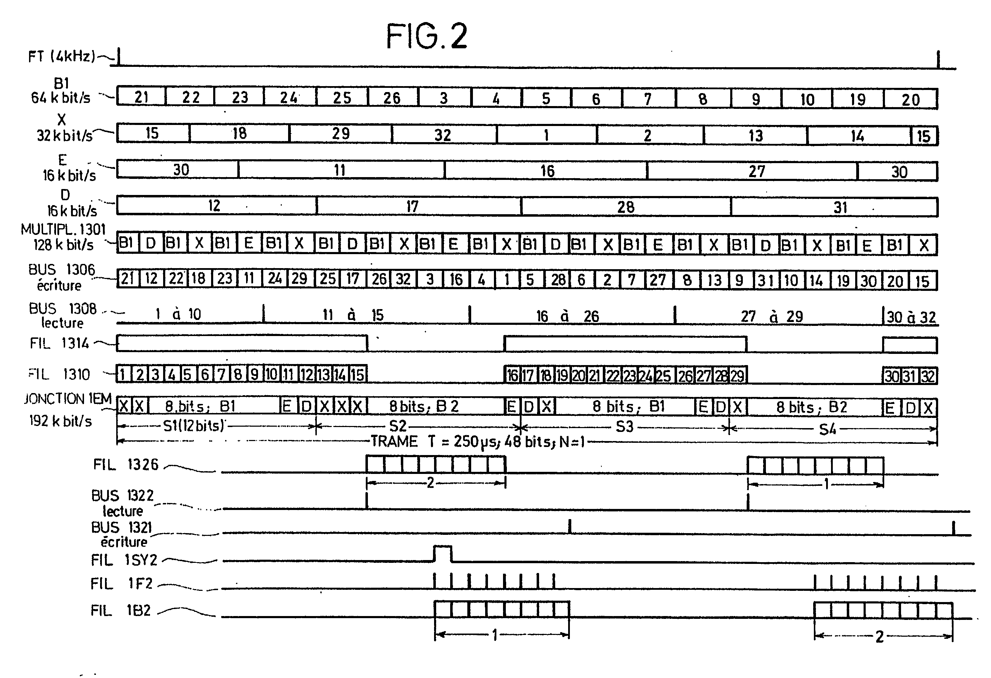

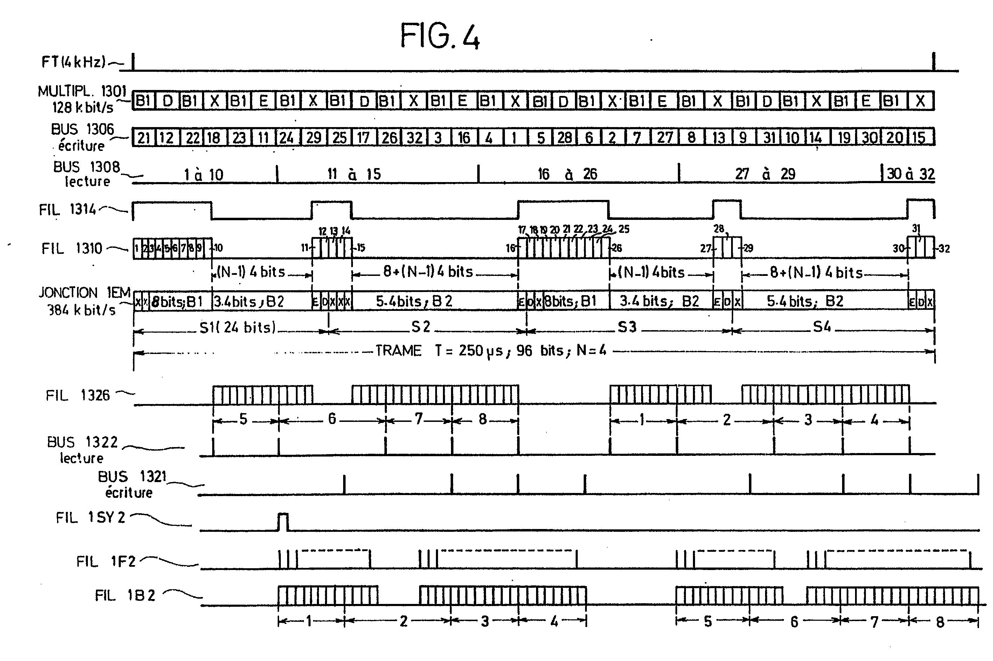

Une première trame T transmise par la station 1 vers la station 2 via le support 12 est issue de multiplexage de cinq canaux B1, B2, D, X et E, comme montré à la Fig.2 ou 4. Une seconde trame t transmise par la station 2 vers la station 1 via le support 21 est issue du multiplexage de cinq canaux b1, b2, d, x et e.

Les premiers canaux B1 et b1 ont des débits constants, typiquement égaux à 64 kbit/s.

Les seconds canaux B2 et b2 sont dits à débit variable, car le débit de chacun de ces canaux peut être modifié à la demande de l'une des stations 1 et 2. Typiquement, les canaux B2 et b2 ont des débits variant entre un débit élémentaire égal à 64 kbit/s et des débits maximaux respectivement égaux à (N.64) kbit/s et (n.64) kbit/s, où N et n sont des entiers compris entre 1 et 1250 environ, afin de permettre de desservir par la station 1 aussi bien des terminaux à bas débit de 64 kbit/s, tels que terminaux télex, télécopieur et vidéotex, que des terminaux à haut débit de 2 Mbits/s ou de 70 Mbit/s par exemple, tels que récepteur haute fidélité, poste de télévision, magnétoscope, et visiophone. En outre, à un instant donné, les canaux B2 et b2 dans la liaison 1-2 peuvent avoir des débits différents. Par exemple, un transmetteur à haute fidélité reçoit des signalisations d'un récepteur à haute fidélité dans le canal D, et la liaison de la régie ves le transmetteur est au débit de base de 192 kbit/s ce qui correspond à un débit du canal B2 égal à B2 = 64 kbit/s. Ce transmetteur transmet des sons haute fidélité numérisés dans le canal b2, et la liaison du transmetteur vers la régie est au débit de 2048 kbit/s ce qui correspond à un débit du canal b2 égal à 1920 kbit/s. Selon un autre exemple, un récepteur vidéo, tel que magnétoscope, transmet des signalisations dans le canal d, et la liaison du récepteur vers la régie est au débit de base de 192 kbit/s ce qui correspond à un débit du canal b2 égal à 64 kbit/s. Ce récepteur reçoit des signaux vidéo numériques dans le canal B2, et la liaison de la régie vers le récepteur est au débit de 70,144 Mbit/s ce qui correspond à un débit du canal B2 égal à 70,016 Mbit/s. Cependant, un terminal, tel qu'un visiophone, utilise les deux canaux B2 et b2 à un même débit élevé, de l'ordre de 70 Mbit/s.

Les troisièmes canaux D et d ont des débits constants, typiquement égaux à 16 kbit/s, et convoient de la signalisation en mode paquet échangée entre les stations 1 et 2, conformément au protocole D de l'interface S définie par le Comité Consultatif International Télégraphique et Téléphonique (CCITT). En plus, les canaux D et d véhiculent des messages permettant de modifier le débit de l'un des canaux B2 et b2 à l'émission dans l'une des stations 1, 2 à la demande de cette station ou de l'autre station 2, 1.

Les quatrièmes canaux X et x sont des canaux ayant des débits constants, typiquement égaux à 32 kbit/s, et véhiculent des bits d'exploitation, des bits de maintenancè et des bits d'équilibrage afin d'éliminer des composantes continues dans les signaux résultant de multiplexage véhiculés dans les supports 12 et 21.

Les cinquièmes canaux E et e sont des canaux dits échos ayant des débits constants, typiquement égaux à 16 kbit/s. Le canal E peut être utilisé en écho du canal D conformément au protocole de l'interface S du CCITT dans le cas où les canaux D de plusieurs interfaces seraient concentrés sur un canal D commun interne à la régie. Le canal e n'a pas d'utilisation particulière.

Selon les valeurs de débit des canaux ci-dessus, le débit du signal résultant du multiplexage dans la station 1 et convoyé par des jonctions intermédiaires 1EM et 2RE respectivement internes aux stations 1 et 2 est égal à 64 + (N.64) + 16 + 32 + 16 = (N+2).64 kbit/s, et la rapidité de modulation du signal convoyé par le premier support de transmission 12 est $\Omega$(N+2)64 kbauds où $\Omega$ est un nombre dépendant du code de transmission choisi dans la liaison 1-2. Le débit du signal résultant du multiplexage dans la station 2 et convoyé par des jonctions intermédiaires 2EM et 1RE respectivement internes aux stations 2 et 1 est égal à 64 + (n.64) + 16 + 48 = (n+2).64 kbit/s, et la rapidité de modulation du signal convoyé par le second support de transmission 21 est $\Omega$(n+2)64 kbauds.

Une première trame T formée dans la station 1 est montrée selon deux exemples respectifs à une onzième ligne de la Fig.2 et une septième ligne de la Fig.4. La trame T contient des premiers champs occupés par des bits des canaux à débit constant, ici en nombre constant égal à cinq, les premiers champs incluant des bits également en nombres constants respectivement égaux à 10, 5, 11, 3 et 3. La trame T est divisée en quatre secteurs consécutifs $S_1$, $S_2$, $S_3$ et $S_4$ ayant une durée de 250/4 = 62,5 µs. Chacun des secteurs $S_1$ à $S_4$ contient au moins 12 bits dont huit sont toujours un octet du canal B1, ou du canal B2. Ainsi, le premier secteur $S_1$ contient toujours un octet du canal B1 succédant à deux premiers bits du canal X, et est terminé par un bit du canal E suivi d'un bit du canal D. Le second secteur $S_2$ contient toujours au moins un octet du canal B2 succédant à 3 bits du canal X et est terminé par un bit du canal E. Le troisième secteur $S_3$ contient toujours un octet du canal B1 succédant à un bit du canal D suivi d'un bit du canal X et est terminé par un bit du canal E suivi d'un bit du canal D. Le quatrième secteur $S_4$ contient toujours au moins un octet du canal B2 succédant à un bit canal X et est terminé par un bit du canal E, un bit du canal D et un bit du canal X se succédant.

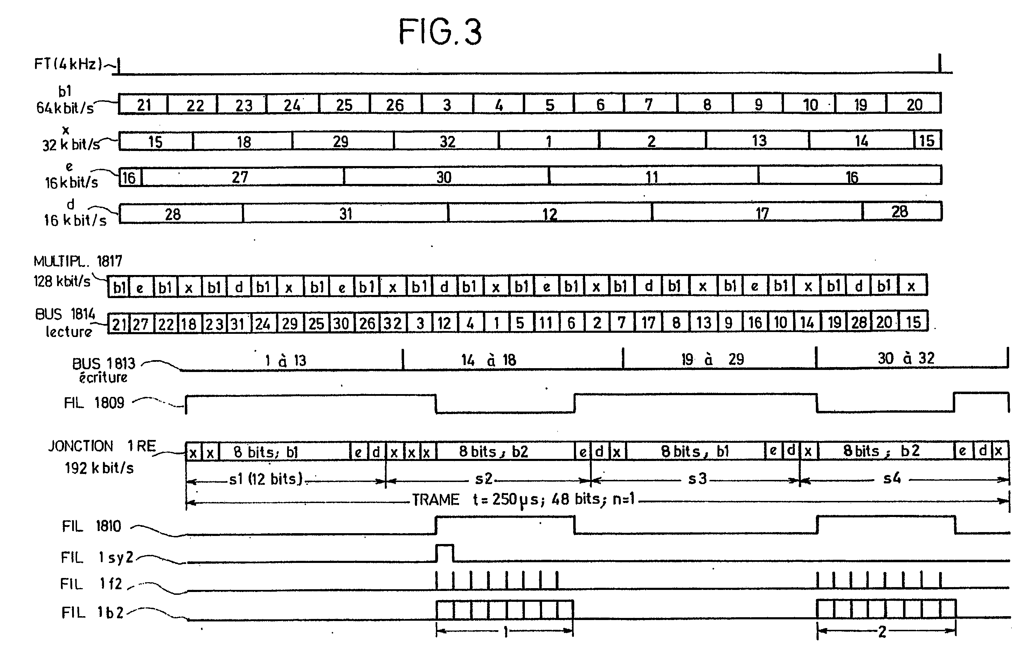

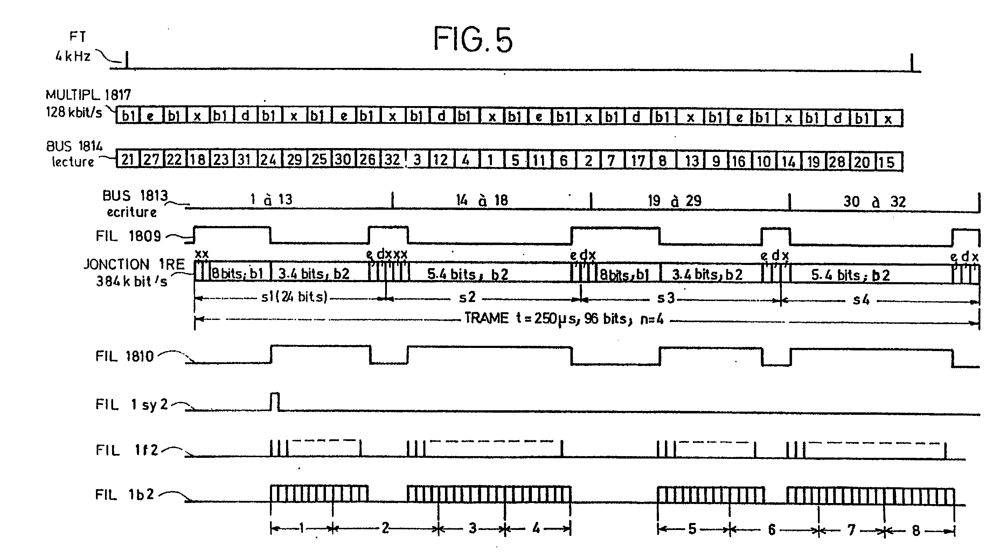

En référence à une dizième ligne de la Fig.3 et à une sizième ligne de la Fig.5, une seconde trame t formée dans la station 2 est analogue à une trame T en remplaçant les bits des canaux B1, X, E, D et B2 par des bits des canaux b1, x, e, d et b2 respectivement. Ainsi, la trame t est divisée en quatre secteurs consécutifs $s_1$, $s_2$, $s_3$ et $s_4$ ayant chacun une durée de 62,5 µs et contenant chacun au moins 12 bits. La répartition des canaux dans les secteurs $s_1$ à $s_4$ est également constante. Le premier secteur $s_1$ comprend toujours un octet du canal b1 succédant à deux bits du canal x et est terminé par un bit du canal e suivi d'un bit du canal d. Le second secteur $s_2$ comprend toujours un octet du canal b2 succédant à trois bits consécutifs du canal x et est terminé par un bit du canal e. Le troisième secteur $s_3$ comprend toujours un octet du canal b1 succédant à un bit du canal d et à un bit du canal x et est terminé par un bit du canal e suivi par un bit du canal d. Le quatrième secteur $s_4$ comprend toujours au moins un octet du canal b2 succédant à un bit du canal x et est terminé par un bit du canal e, un bit du canal d et un bit du canal x se succédant.

Les trames T et t telles que définies ci-dessus et montrées aux Figs.2 et 3 correspondent à une liaison au débit de base de 192 kbit/s et à N = n = 1, par exemple pour un terminal à bas débit ou à n'importe quel terminal en attente de l'établissement d'une communication, comme on le verra dans la suite.

Dans d'autres conditions, suite à l'établissement d'une communication d'arrivée ou de départ, le débit du canal B2 dans les jonctions 1EM et 2RE peut être modifié en un débit plus élevé (N.64) kbit/s et la trame T contient alors (N.16) bits du canal B2, et/ou le débit du canal b2 dans les jonctions 2EM et 1RE peut être modifié en un débit plus élevé (n.64) kbit/s et la trame t contient alors (n.16) bits du canal b2. Les Figs.4 et 5 montrent de telles trames T et t pour N=n=4. Dans ce cas, chaque secteur de trame T,t contient en plus (N-1)16/4=(n-1)16/4 bits du canal B2, b2 par rapport aux trames au débit de base montrées aux Figs.2 et 3. Ainsi, en référence aux Figs.4 et 5, le premier secteur $S_1$, $s_1$ contient 4(N-1) = 4(n-1) = 12 bits consécutifs du canal B2, b2 succédant à l'octet du canal B1, b1 dans ce secteur ; le second secteur $S_2$, $s_2$ contient 8+12 bits consécutifs du canal B2, b2 succédant aux trois premiers bits correspondants du canal X, x dans ce secteur ; le troisième secteur $S_3$, $s_3$ contient 12 bits consécutifs du canal B2, b2 succédant à l'octet du canal B1, b1 dans ce secteur ; et le quatrième secteur $S_4$, $s_4$ contient 8+12 bits consécutifs du canal B2, b2 succédant au premier bit du canal X, x dans ce secteur.

En se reportant à nouveau à la Fig.1, des équipements de multiplexage et démultiplexage reliés aux supports de transmission 12 et 21 relatifs aux deux stations 1 et 2 ont des structures pratiquement identiques. Ainsi, les équipements dans la station 1, 2 comprennent, du côté émission, un multiplexeur programmable à multidébit 13, 23, une base de temps programmable 14, 24 et un circuit d'émission 15, 25, et du côté réception, un circuit de réception 16, 26, un récupérateur d'horloge programmable 17, 27 et un démultiplexeur programmable à multidébit 18, 28. Les circuits programmables son programmés sous le contrôle d'une unité de commande 19, 29 également incluse dans la station 1, 2.

Les équipements de multiplexage et démultiplexage dans les stations ayant des structures et fonctionnement pratiquement identiques, ceux inclus dans la station 1 sont décrits ci-après en référence aux Figs.1, 6 à 9.

L'unité de commande 19 reçoit le canal d démultiplexé au débit de 16 kbit/s par une voie de sortie 1d du démultiplexeur 18 et détecte des paquets qui lui sont destinés et transmis par l'unité de commande 29 de l'autre station 2, en vue d'un changement de débit dans au moins l'un des supports de transmission 12 et 21. Une demande de changement de débit peut être également transmise dans des paquets d'une voie d'entrée 1D du multiplexeur 13, véhiculant le canal D au débit initial de 16 kbit/s, suite à une demande de changement de débit survenant d'un terminal local desservi par la station 1 ou d'un terminal éloigné, via le réseau commuté.

Pour effectuer un changement de débit au niveau des équipements de multiplexage et démultiplexage correspondants, une unité de commande 19 écrit de nouvelles données dans tous les circuits programmables de ces équipements. L'unité de commande 19 transmet le nombre N à la base de temps 14, le nombre n au récupérateur d'horloge 17, le format de la trame T à émettre au multiplexeur 13 et le format de la trame t à recevoir au démultiplexeur 18 via un bus 190.

Il est à noter que tant que l'une des stations 1 ou 2 n'a pas accusé réception d'une demande de changement de débit émanant de l'autre station 2 ou 1, les nombres N et n ne sont pas modifiés. Par exemple, dès la mise en fonctionnement du terminal ou station 2, les nombres N et n sont égaux à un et les supports 12 et 21 offrent une rapidité de modulation correspondant au débit de base de 192 kbit/s. Après un premier changement de débit pour lequel N est différent de 1 et/ou n est différent de 1, un second changement de débit peut donner aux nombres N et n soit des valeurs égales à un, par exemple dans le cas où le terminal fonctionne en temps partagé, soit directement des valeurs différentes de un et de celles précédant le second changement de débit. Dans tous les cas, lorsque les deux stations retournent à un état de veille, en attente de l'établissement d'une nouvelle communication, les canaux ne convoient aucun signal vers les entrées des multiplexeurs 13 et 23.

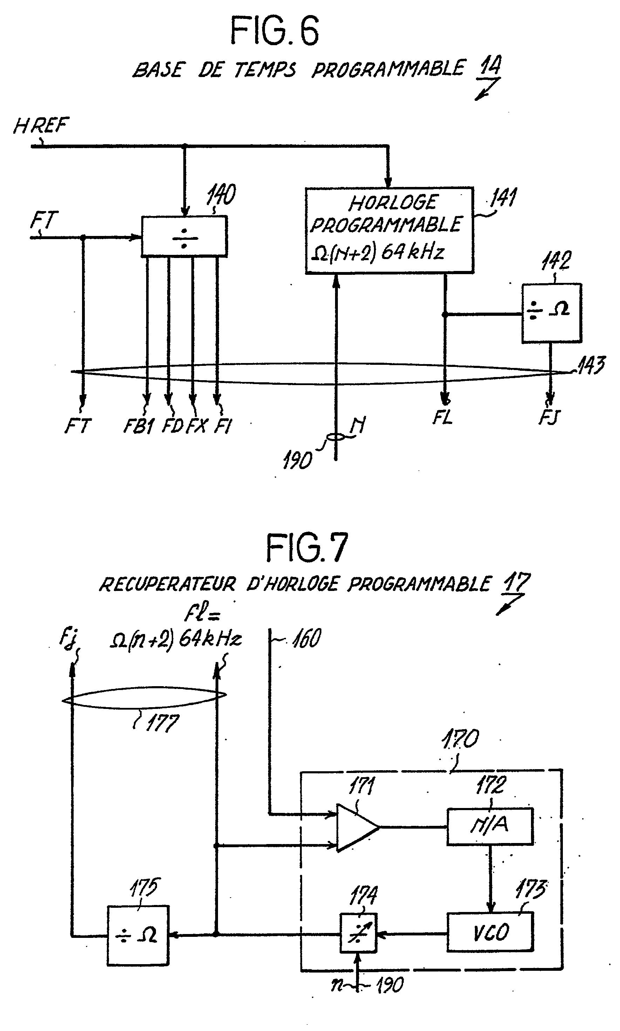

En référence à la Fig.6, la base de temps 14 contient essentiellement deux diviseurs de fréquence non programmables 140 et 142 et une horloge de fréquence programmable 141. La base de temps 14 reçoit de la régie deux horloges permettant la synchronisation de tous les équipements de transmission, une horloge de synchronisation trame FT à la fréquence de trame de 4 kHz et une horloge de référence HREF de fréquence k.64 kHz, où k est un entier. Le diviseur de fréquence non programmable 140 produit à partir de l'horloge de référence HREF et de l'horloge de trame FT, des signaux d'horloge à la fréquence initiale FB1 du canal B1 égale à 64 kHz, à la fréquence initiale FD = 16 kHz des canaux D et E égale à la fréquence des secteurs $S_1$ à $S_4$, à la fréquence initiale FX du canal X égale à 32 kHz et à une fréquence de multiplexage intermédiaire FI des canaux à débits constants B1, D, E et X égale à 128 kHz. L'horloge 141 est programmable en fonction du nombre N dans le bus 190 et produit un signal d'horloge à la fréquence variable FI=Ω(N+2)64 kHz égale à la rapidité de modulation du signal véhiculé dans le support 12. Le diviseur non programmable 142 divise la fréquence du signal FL par Ω pour produire la fréquence de rythme variable FJ du signal résultant du multiplexage et véhiculé dans la jonction 1EM, égale à ((N+2).64) kHz. Les sept signaux d'horloge précités sont appliqués par un bus de sortie 143 de la base de temps 14 à des entrées d'horloge du multiplexeur 13, du démultiplexeur 18 et du circuit d'émission 15.

En référence à la Fig.7, le récupérateur d'horloge 17 du côté réception contient essentiellement un circuit à boucle de verrouillage de phase 170 permettant de récupérer la fréquence de rythme fℓ du signal résultant du multiplexage dans le multiplexeur 23, et véhiculé dans le support 21, égale à Ω(n+2)64 kHz, et un diviseur de fréquence non programmable 175. Le circuit 170 comprend classiquement un comparateur de phase 171 recevant par une première entrée 160 un signal de rythme produit par le circuit de réception 16, un circuit de commande en tension 172, tel qu'un convertisseur numérique-analogique, et un oscillateur commandé en tension 173. Entre une sortie de l'oscillateur et une seconde entrée du comparateur de phase, le circuit 170 comprend un diviseur de fréquence 174 programmable par l'unité de commande 19 en fonction du nombre n dans le bus 190 afin de permettre de récupérer un signal d'horloge à la fréquence fℓ = Ω(n+2)64 kHz synchrone avec la base de temps 24 de l'autre station 2, lors de tout changement de débit dans le support de transmission 21. A partir de la fréquence de rythme fℓ, le diviseur de fréquence non programmable 175 divise la fréquence du signal fℓ par Ω et produit un signal d'horloge fj à la fréquence de rythme variable du signal multiplexé véhiculé dans la jonction 1RE égale à (n+2)64 kHz. Les deux signaux d'horloge précités sont appliqués par un bus de sortie 177 du circuit de récupération d'horloge 17 à des entrées d'horloge du circuit de réception 16 et du démultiplexeur 18.

Il est à noter que les trames T et t dans les supports 12 et 21 sont déphasées d'un déphasage τ typiquement égale à 10,4 µs, quelle que soit la rapidité de modulation. Le déphasage τ correspond à un temps de garde minimal dans la station 2 entre la fin de la réception d'un bit dans le canal D et le début de la transmission d'un bit dans le canal d afin de satisfaire à des critères de résolution de conflits d'accès au canal D.

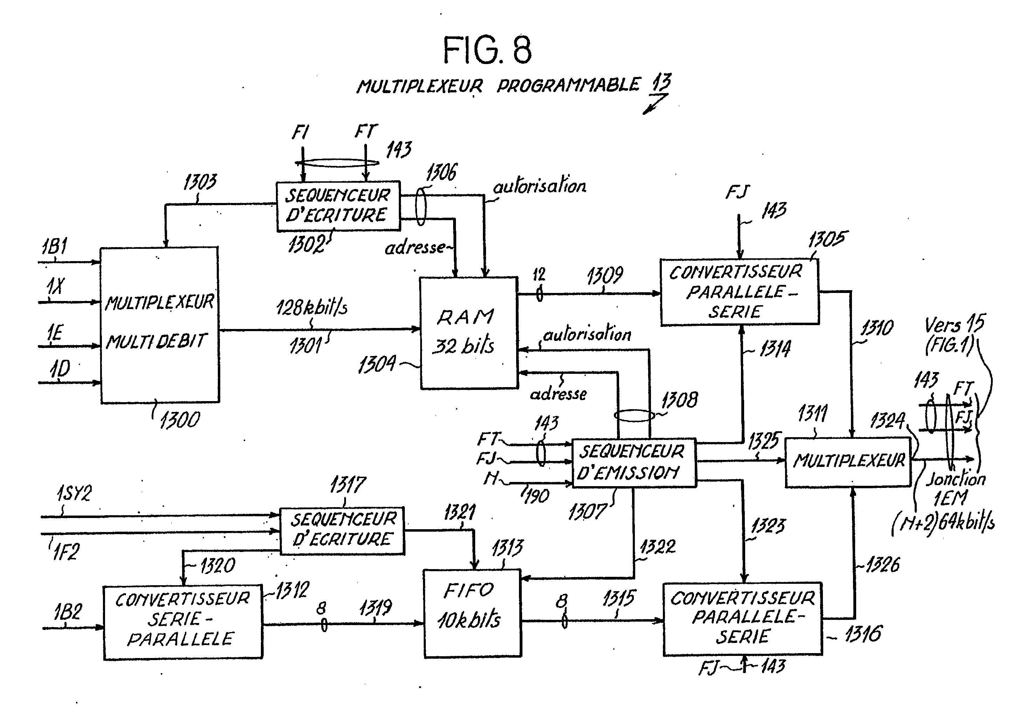

En référence à la Fig.8, le multipleur 13 comprend des moyens pour multiplexer les canaux B1, X, E et D à débits initiaux constants mais différents entre eux en un signal multiplex au débit de FJ dans lequel des canaux B1, X, E et D sont déjà répartis selon la structure de la trame T, et des moyens distincts des moyens pour multiplexer pour augmenter le débit initial du canal B2 au débit FJ dans la jonction 1EM et pour répartir les bits du canal B2 selon la structure de la trame T.

Les moyens pour multiplexer les canaux B1, X, E et D comprennent en entrée un multiplexeur à multidébit 1300 recevant par des voies d'entrée 1B1 et 1X les canaux B1 et X aux débits initiaux de 64 kbit/s et 3 kbit/s, et par les voies d'entrée 1D et 1E, les canaux D et E aux débits initiaux de 16 kbit/s, respectivement. Le multiplexeur 1300 multiplexe bit à bit les canaux B1, X, D et E en un signal numérique intermédiaire ayant la fréquence de rythme constante FI = (64 + 32 + 16 + 16) = 128 kHz dans une voie intermédiaire 1301. Dans la voie 1301, le signal intermédiaire est composé de trames ayant une durée égale à 250 µs. Chaque trame de 250 µs comprend 16 bits du canal B1, 8 bits du canal X, 4 bits du canal E et 4 bits du canal D. D'une manière classique, le multiplexeur 1300 est commandé par un séquenceur d'écriture 1302 et sélectionne l'une des voies d'entrée 1B1, 1X, 1E et 1D afin de constituer des trames recurrentes de 250 μs ayant une structure telle que la séquence de bits B1, D, B1, X, B1, E, B1, X est répétée quatre fois. Le séquenceur d'écriture 1302 inclus dans le multiplexeur 13 élabore à partir des signaux d'horloge FI et FT, un signal de commande de sélection d'entrées du multiplexeur 1300 délivré par un bus 1303 au multiplexeur 1300.

Des groupes de 32 bits du signal multiplex intermédiaire dans la voie 1301 sont écrits à la fréquence de trame FT dans une mémoire tampon à accès aléatoire RAM 1304 à entrée série et sorties parallèles. La mémoire RAM a une capacité de 32 cellules de un bit, égale au nombre de bits des canaux B1, X, E et D dans une trame T, comme montré à la Fig.2. Chaque bit du signal multiplex à 128 kbit/s est écrit dans une cellule de la mémoire 1304 ayant pour adresse le numéro de l'emplacement du bit dans la trame T. Ainsi, en référence à la Fig.2, les bits B1, D, B1, X , B1, E, B1, X ; B1, D, B1, X, B1, E, B1, X ;.... dans le signal intermédiaire au début d'une trame T sont écrits respectivement dans les cellules de la mémoire 1304 ayant pour adresses 21, 12, 22, 18, 23, 11, 24, 29, 25, 17, 26, 32, 3, 16, 4, 1...., respectivement. Les adresses selon l'ordre d'écriture précédent sont fournies par le séquenceur 1302 à la mémoire 1304 via un bus d'adresse et d'autorisation d'écriture 1306.

La lecture des bits dans la mémoire 1304 est commandée par un séquenceur d'émission 1307 afin de transmettre les bits des canaux B1, X, E et D selon l'ordre indiqué dans la trame T, à la fréquence de rythme FJ = (N+2)64 kHz dans la jonction 1EM. En fonction des signaux d'horloge FT et FJ délivrés par la base de temps 14, le séquenceur 1307 élabore un signal régulier d'autorisation de lecture ainsi que des adresses de lecture via un bus d'autorisation et d'adresse de lecture 1308, comme montré à une huitième ligne de la Fig.2 ou à une quatrième ligne de la Fig.4, et élabore également un signal de chargement et de validation pour un convertisseur parallèle-série 1305, ayant des créneaux correspondant aux emplacements des bits des canaux B1, X, E et D dans la trame T, via un fil 1314, comme montré à une neuvième ligne de la Fig.2 ou à une cinquième ligne de la Fig.4. Ainsi pendant une trame T, les cellules d'adresses 1 à 10, puis 11 à 15, 16 à 26, 27 à 29 et 30 à 32 dans la mémoire 1304 sont lues simultanément et leurs contenus sont transmis en parallèle au convertisseur parallèle-série 1305 à travers un bus 1309 afin de former les cinq champs de la trame T occupés par les bits en série des canaux à débits constants dans un fil de sortie 1310 du convertisseur 1305, comme montré à une dizième ligne de la Fig.2 ou à une sixième ligne de la Fig.4. Les champs précités sont séparés par des intervalles vides de bits destinés à être occupés par des bits du canal B2. Les bits des canaux à débits constants ainsi répartis dans les trames T sont transmis en série par le fil 1310 vers une première entrée d'un multiplexeur de sortie 1311 commandé par le séquenceur 1307 via un bus 1325.

Dans le multiplexeur 13, les moyens pour augmenter le débit initial du canal B2 et pour répartir des bits de ce canal dans les trames T comprennent un convertisseur série-parallèle d'entrée 1312, une mémoire tampon du type file FIFO (First-in First-out) 1313, un convertisseur parallèle-série de sortie 1316, un séquenceur d'écriture 1317 et le séquenceur d'émission 1307. La mémoire 1313 et le séquenceur 1317 offrent des fonctionnements analogues à ceux de la mémoire 1304 et du séquenceur 1302 respectivement.

Dans une voie d'entrée 1B2 du multiplexeur 13, le canal B2 offre un débit moyen initial égal à N.64 kbit/s. Selon une première variante, N.16 bits du canal B2 sont répartis régulièrement dans la voie 1B2 pendant une période de trame T, d'une manière analogue à la répartition régulière des bits du canal B1. Selon une seconde variante, les N.16 bits du canal B2 sont distribués en blocs de bits prédéterminés par la régie selon une répartition prédéterminée pendant une période de trame ; par exemple, cette répartition prédéterminée de blocs est a priori déphasée par rapport et identique à celle des deux ou quatre champs destinés à être occupés par les bits du canal B2 dans la trame à constituer par le multiplexeur 13, comme montré à une dernière ligne de la Fig.2 ou 4. Dans tous les cas, la régie transmet un signal de synchronisation à la fréquence de trame en phase avec le premier bit du canal B2 pendant une période de trame, et un signal de fréquence de rythme de bit réelle du canal B2 dans des voies d'entrée 1SY2 et 1F2 du séquenceur 1317. Le convertisseur 1312 convertit le canal reçu B2 en groupes de 8 bits parallèles convoyés dans une voie intermédiaire à huit fils 1319 reliée à des entrées de la mémoire FIFO 1313.

La mémoire 1313 a une capacité de 1250.8 = 10000 bits afin de permettre la mémorisation de tous les bits d'un canal B2 ayant le débit maximal de (1250.64) kbit/s = 80 Mbit/s pendant une demi-période de trame de 125 μs. La mémoire 1313 contient 1250 cellules de 8 bits.

En fonction des signaux d'horloge SY2 et F2 le séquenceur d'écriture 1317 commande le convertisseur 1312 via un bus 1320 et établit un signal de commande d'écriture transmis à la mémoire 1313 via un bus 1321. Comme montré à une quatorzième ligne de la Fig.2 ou une dixième ligne de la Fig.4, le signal de commande d'écriture autorise une écriture de groupes de 8 bits de la voie 1319 dans la mémoire FIFO chaque fois qu'un tel groupe de 8 bits a été reçu dans la voie 1B2 à la fréquence moyenne de 8N kHz.

Le séquenceur d'émission 1307 recevant les signaux d'horloge FT et FJ de la base de temps 14 via le bus 143 et le nombre codé N de l'unité de commande 19 élabore à partir de ces signaux d'horloge un signal de lecture précédant l'émission de tout groupe de 8 bits à l'intérieur des quatre seconds champs dans la trame T propres à être occupés par des bits du canal B2, comme montré à une treizième ligne de la Fig.2 ou à une neuvième ligne de la Fig.4. Le signal de lecture est appliqué à la mémoire 1313 via un bus 1322. Ainsi pendant une trame T de durée 250 μs, deux cellules sont lues dans la mémoire 1313 pour insérer 8 bits du canal B2 dans le secteur $S_2$ puis 8 bits du canal B2 dans le secteur $S_4$ lorsque N

= 1, comme montré à la Fig.2. Lorsque N est différent de 1, comme montré à la Fig.4, 2N cellules sont lues dans la mémoire 1313 pendant 250 µs pour insérer (N-1)4 bits, (N+1)4 bits, N-1)4 bits et (N+1)4 bits du canal B2 dans les secteurs $S_1$ à $S_4$ respectivement. Les groupes lus de 8 bits parallèles du canal B2 sont sérialisés dans le convertisseur parallèle-série 1316 commandé par le séquenceur d'émission 1307 via un bus 1323. Le convertisseur 1316 transmet ainsi à une troisième entrée du multiplexeur 1311 un signal numérique dans lequel des intervalles "blancs" sont dépourvus d'information et sont propres à être occupés par les bits des canaux B1, X, E et D délivrés par le fil de sortie 1310 du convertisseur 1305. Tous les canaux B1, B2, X, E et D selon la configuration de la trame T sont multiplexés dans le multiplexeur 1311 en le signal résultant au débit de (N+2)64 kbit/s dans un fil 1324 grâce à des signaux de multiplexage fournis par le séquenceur 1307 via le bus 1325. Le signal résultant est transmis en synchronisme avec les signaux d'horloge FT à 4 kHz et FJ à (N+2)64 kHz dans la jonction interne 1EM vers le circuit d'émission 15.

Le circuit d'émission 15 est classique et comprend par exemple un transcodeur du code binaire NRZ en un code de ligne, tel qu'un code CMI, ainsi qu'un adapteur de ligne. Le signal en ligne a une rapidité de modulation variable de valeur $\Omega$(N+2)64 kbauds, où $\Omega$ dépend du code de ligne. Pour le code CMI, $\Omega$ est égal à 2. De même, le circuit de réception 16 comprend dans ce cas un transcodeur CMI - binaire NRZ délivrant le signal numérique à trame t résultant du multiplexage dans la station 2. Le circuit 16 extrait du signal de ligne le signal de synchronisation de trame ft transmis dans la liaison 1RE.

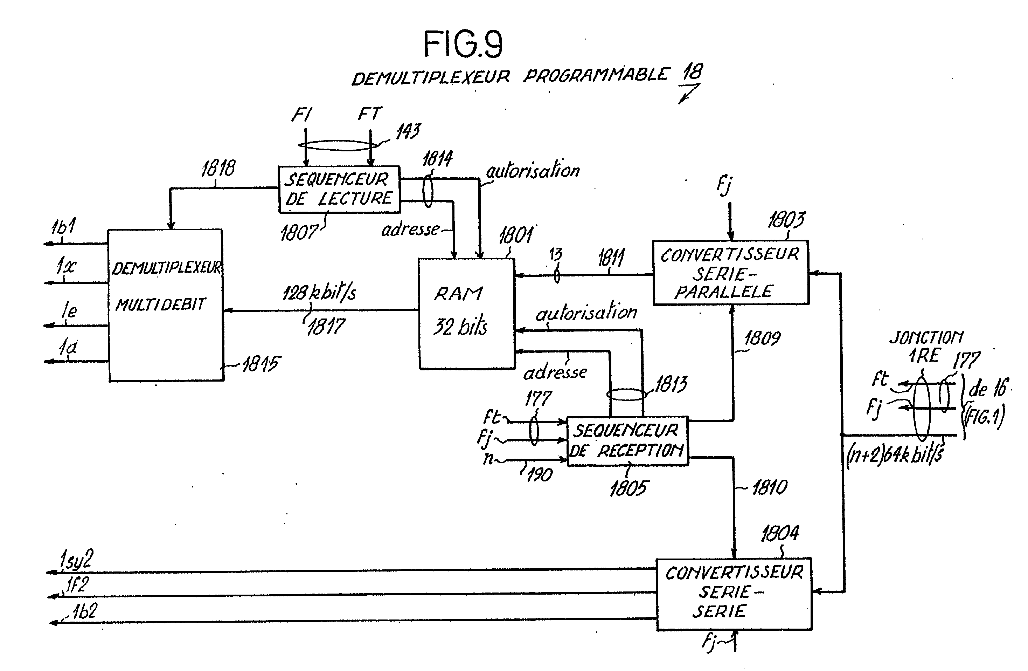

Le démultiplexeur 18 montré en détail à la Fig.9 procède à des opérations réciproques de celles effectuées dans le multiplexeur 13 et démultiplexe cinq canaux b1, b2, x, e et d.

Le démultiplexeur 18 comprend essentiellement un convertisseur série-parallèle 1803, un convertisseur série-série 1804, une mémoire tampon 1801, un séquenceur de réception 1805, un séquenceur de lecture 1807, et un démultiplexeur à multidébit 1815 pour remettre sous leurs formes initiales d'une part les canaux ayant des débits constants b1, x, e et d, et d'autre part le canal à débit variable b2.

Le séquenceur de réception 1805 élabore à partir d'un signal d'horloge ft à la fréquence des trames t et du signal d'horloge fj à la fréquence des bits reçus égale à (n+2)64 kHz transmis par le circuit de réception 16 à travers la jonction interne 1RE, deux signaux ayant les créneaux d'impulsions encadrant respectivement des premiers champs de bits successifs des canaux b1, x, e et d et des seconds champs de bits successifs du canal b2 et délivrés par des fils 1809 et 1810 aux convertisseurs 1803 et 1804, comme montré à des neuvième et onzième lignes dans la Fig.3 ou à des cinquième et septième lignes dans la Fig.5. Le séquenceur 1805 sépare ainsi le signal numérique entrant à trame t et débit (n+2)64 kbit/s décodé dans le circuit de réception 16, en un signal numérique ne contenant que les bits des canaux b1, x, e et d traité par le convertisseur série-parallèle 1803 et un signal numérique ne contenant que les bits du canal b2 traité par le convertisseur série-série 1804.

La mémoire tampon 1801 est une mémoire à accès aléatoire RAM à entrées parallèles et sortie série ayant une capacité de 32 cellules à un bit, égale au nombre constant de bits des canaux b1, x, e et d contenus dans une trame t. Des adresses d'écriture des cellules de la mémoire 1801 sont établies par le séquenceur de réception 1805 et sont délivrées par un bus d'adresse et d'autorisation d'écriture 1813 suivant l'ordre naturel 1 à 32 prendant une trame t, comme montré à une huitième ligne dans la Fig.3 ou à une quatrième ligne dans la Fig.5. Ainsi pendant une trame t, les bits à mémoriser dans les cellules d'adresses 1 à 13, puis 14 à 18, 19 à 29, 30 à 32 sont reçus dans le convertisseur 1803 et transmis en parallèle à la mémoire 1801 via un bus 1811. Cependant des adresses de lecture des cellules de la mémoire 1801 sont délivrées à la fréquence FI = 128 kHz selon un ordre différent de l'ordre naturel 1 à 32 par le séquenceur de lecture 1807 pendant une trame t, via un bus d'adresse et d'autorisation de lecture 1814, le séquenceur 1807 recevant les signaux d'horloge FI et FT de la base de temps 14 via le bus 143. Cet ordre d'adresses de lecture est déterminé par la répartition de bits de canaux b1, x, e et d dans un signal multiplex intermédiaire au débit de 64 + 32 + 16 + 16 = 128 kbit/s transmis par une sortie de la mémoire 1801 vers le démultiplexeur à multidébit 1815 via une voie intermédiaire 1817. Le signal multiplex intermédiaire est montré à une sixième ligne dans la Fig.3 ou à une deuxième ligne dans la Fig.5 et comporte une trame de T = 250 µs composée de 32 bits consécutifs, ayant une séquence telle que b1, e, b1, x, b1, d, b1, x, répétée quatre fois. La trame précédente est obtenue par lecture des cellules dans la mémoire 1801 suivant l'ordre des adresses successives suivantes : 21, 27, 22, 18, 23, 31, 24, 29..... 28, 20, 15, comme montré à une septième ligne dans la Fig.3 ou à une troisième ligne dans la Fig.5, afin que les canaux b1, x, e et d répartis selon la structure de la trame t soient multiplexés bit à bit dans la voie intermédiaire 1817. Puis dans le démultiplexeur à multidébit 1815, sous la commande de signaux d'horloge convenables produits par le séquenceur 1807 dans un bus 1818 et appliqués à quatre mémoires tampons incluses dans le démultiplexeur 1815, le signal multiplex intermédiaire à 128 kbit/s est démultiplexé en les quatre canaux b1, x, e et d à débits initiaux de 64, 32, 16 et 16 kbit/s transmis par des voies de sortie 1b1, 1x, 1e et 1d du circuit 18, comme montré à des seconde, troisième, quatrième et cinquième lignes dans la Fig.3.

Au sujet de la remise en forme du canal à débit variable b2, les bits de ce canal extraits dans les trames t par le convertisseur série-série 1804 sont retransmis en série dans une voie de sortie 1b2 du démultiplexeur 18, accompagnés d'un signal d'horloge marquant les bits du canal b2 dans un fil 1f2 et d'un signal de synchronisation marquant le premier bit du canal b2 dans une trame t dans un fil 1sy2, comme montré à des douzième, treizième et quatorzième lignes dans la Fig.3 ou à des huitième, neuvième et dizième lignes dans la Fig.5. Dans les Figs.3 et 5, comme dans les Figs.2 et 4, on a supposé que le canal b2 restitué à la régie offrait une répartition de blocs de bits identique à celle des quatre seconds champs dans une trame t.

Il est à noter que selon d'autres réalisations de l'invention les adresses d'écriture de la mémoire 1304 peuvent être délivrées selon l'ordre naturel 1 à 32 via le bus 1306, et des adresses de lecture de la mémoire 1304 peuvent être délivrées selon les emplacements ordonnés des bits des canaux B1, X, E et D dans la trame T via le bus 1308, savoir selon l'ordre 16, 20, 13, 15, 17, 19, 21, 23, 25, 27 ; 6, 2, 24, 28, 32 ; 14, 10, 4, 29, 31, 1, 3, 5, 7, 9, 11 ; 22, 18, 8 ; 30, 26, 12. De même, des adresses de lecture de la mémoire 1801 peuvent être délivrées selon l'ordre naturel 1 à 32 via le bus 1814, et des adresses d'écriture de la mémoire 1801 peuvent être délivrées selon les emplacements ordonnés des bits des canaux b1, x, e et d dans la trame t via le bus 1813, savoir selon l'ordre 16, 20, 13, 15, 17, 19, 21, 23, 25, 27 ; 18, 14, 24, 28, 32 ; 26, 22, 4, 29, 31, 1, 3, 5, 7, 9, 11 ; 2, 30, 8 ; 10, 6, 12.

Comme déjà dit, le multiplexeur 23 et le démultiplexeur 28 dans la station 2 fonctionnent d'une manière analogue aux circuits 13 et 18 décrits en détail ci-dessus, respectivement. En effet, l'opération de multiplexage dans le multiplexeur 23 consiste à multiplexer d'une part le canal b1 à 64 kbit/s, le canal x à 32 kbit/s, le canal e à 16 kbit/s et le canal d à 16 kbit/s reçus par des voies d'entrées 2b1, 2x, 2e et 2d en un signal à débit intermédiaire à 128 kbit/s, et d'autre part, à multiplexer ce signal à débit intermédiaire et le canal b2 à (n.64) kbit/s reçu par une voie d'entrée 2b2 en le signal résultant à (n+2)64 kbit/s et à trame t transmis dans la jonction interne 2EM entre le multiplexeur 23 et le circuit d'émission 25. Cette opération de multiplexage est déduite de l'opération de multiplexage dans le multiplexeur 13 indiquée dans la Fig.4, en remplaçant N par n. Des fils 2sy2 et 2f2 en entrée du multiplexeur 23 sont adjoints à la voie 2b2 pour fournir des signaux de marquage de premier bit du canal b2 dans une trame t et des bits du canal b2, comme dans les fils 1SY2 et 1F2. De même, l'opération de démultiplexage dans le démultiplexeur 28 consiste à démultiplexer le signal numérique à (N+2)64 kbit/s et à trame T dans la jonction interne 2RE entre le circuit de réception 26 et le démultiplexeur 28 en un signal intermédiaire à 128 kbit/s contenant les bits de canaux B1, X, E et D et en le canal B2 à (N.64) kbit/s délivré par une voie de sortie 2B2 d'une part, et à démultiplexer le signal intermédiaire en le canal B1 à 64 kbit/s, le canal X à 32 kbit/s, le canal E à 16 kbit/s et le canal D à 16 kbit/s délivrés par des voies de sortie 2B1, 2X, 2E et 2D du démultiplexeur 28, d'autre part. Cette opération de démultiplexage est déduite de l'opération de démultiplexage dans le démultiplexeur 18 indiquée dans la Fig.5, en remplaçant n par N. Comme le démultiplexeur 18, le démultiplexeur 28 fournit au terminal des signaux de marquage du premier bit du canal restitué B2 dans une trame T et des bits de ce canal B2 dans des fils de sortie 2SY2 et 2F2.

Comme dans la station 1, l'unité de commande 29 dans la station reçoit ou transmet une information de changement de débit de l'un ou des deux canaux B2 et b2 à partir des voies 2D et 2d.

Les circuits dans la station 2 doivent se synchroniser sur la station 1, en réception et en émission. A la différence de la station 1, les horloges HREF et FT sont élaborées par le circuit de réception 26 de la station 2 et transmises à la base de temps programmable 24 dans la station 2 via un bus 261.

## Revendications

1 - Equipement de multiplexage pour multiplexer un premium signal numérique (B1, X, E, D) ayant une première fréquence de rythme constante (128 kHz) avec un signal numérique (B2) ayant une seconde fréquence de rythme (N.64 kHz) en un signal numérique résultant (1EM) ayant une fréquence de rythme ((N+2) 64 kHz) égale à la somme des première et seconde fréquences de rythme et structuré en trames récurrentes ayant une période prédéterminée (T), comprenant des premiers moyens (1304) pour mémoriser des bits consécutifs du premier signal (B1, X, E, D) reçus pendant une période de trame (T), des premiers moyens (1302) pour écrire les bits reçus du premier signal dans les premiers moyens pour mémoriser au rythme de la première fréquence (128 kHz), des moyens (1307) pour lire les bits écrits du premier signal à la fréquence de rythme ((N+2) 64 kHz) du signal résultant, des seconds moyens (1313) pour mémoriser des bits du second signal (B2) reçus pendant au plus une période de trame (T), des seconds moyens (1317) pour écrire les bits reçus du second signal dans les seconds moyens pour mémoriser au rythme de la seconde fréquence (N.64 kHz), des moyens (1307) pour lire les bits écrits du second signal à la fréquence de rythme ((N+2).64 kHz) du signal résultant, et des moyens d'émission et de transcodage (15) du signal résultant (1EM) en un signal en ligne (12), caractérisé en ce que le premier signal numérique (B1, X, E, D) convoie une information (N) de changement de fréquence de rythme du second signal numérique (B2), en ce que chaque trame (T) du signal résultant (12) comprend un nombre de bits constant du premier signal numérique (B1, X, E, D) égal au produit constant de la première fréquence de rythme (128 kHz) par la période de trame (T = 250 μs) quelle que soit la fréquence de rythme variable (N.64 kHz) du second signal numérique (B2), et un nombre de bits variable du second signal numérique (B2) égal au produit de la seconde fréquence de rythme variable (N.64 kHz) par la période de trame (T = 250 μs), la fréquence de rythme ((N+2).64 kHz) du signal résultant étant variable et égale à la somme de la première fréquence de rythme constante (128 kHz) et de la seconde fréquence de rythme variable (N.64 kHz), et en ce que l'équipement de multiplexage comprend des moyens (19) pour détecter l'information de changement de fréquence de rythme (N), et des moyens (14) programmables en fonction de l'information de changement de fréquence de rythme détectée (N) pour produire au moins un signal d'horloge (FJ) à la fréquence de rythme variable du signal résultant ((N+2).64 kHz) à appliquer aux moyens pour lire (1307) et un signal d'horloge (FL) correspondant à une rapidité de modulation variable (Ω(N+2)64 kHz) du signal en ligne (12) à appliquer aux moyens d'émission et de transcodage (15).

2 - Equipement de multiplexage conforme à la revendication 1, caractérisé en ce que chaque trame (T) du signal résultant (1EM) contient un nombre prédéterminé de premiers champs (XX, 8B1 ; EDXXX ; EDX, 8B1 ; EDX ; EDX) occupés par des nombres constants respectifs de bits du premier signal (B1, X, E, D), répartis à des emplacements prédéterminés dans la trame et ayant des durées variables en fonction de la fréquence de rythme variable ((N+2).64 kHz) du signal résultant, et un nombre prédéterminé de seconds champs ((N-1)4 B2 ; (N+1)4 B2 ; (N-1)4 B2 ; (N+1)4 B2) occupés par des bits du second signal (B2), ayant des durées respectives variables en fonction de la fréquence de rythme du signal résultant, et répartis à des emplacements entre les emplacements des premiers champs.

3 - Equipement de multiplexage conforme à la revendication 2, caractérisé en ce que les bits du premier signal (B1, X, E, D) sont distribués dans la trame (T) du signal résultant (1EM) selon un ordre prédéterminé différent de celui d'apparition des bits dans le premier signal, et en ce que les premiers moyens pour écrire (1302) et les moyens pour lire (1307) adressent respectivement en écriture et lecture les premiers moyens pour mémoriser (1304) par l'intermédiaire de nombres entiers ordonnés naturellement et selon l'ordre prédéterminé, ou réciproquement.

4 - Equipement de multiplexage conforme à l'une quelconque des revendications 1 à 3, caractérisé en ce que les premiers moyens pour mémoriser (1304) sont du type mémoire à accès aléatoire (RAM) ayant une capacité au moins égale audit nombre de bits constant du premier signal (B1, X, E, D) dans la trame (T).

5 - Equipement de multiplexage conforme à l'une quelconque des revendications 1 à 4, caractérisé en ce qu'il comprend des moyens (1300) recevant des signaux numériques (1B1, 1X, 1E, 1D) ayant des débits constants et différents entre eux et commandés par les premiers moyens d'écriture (1302) pour multiplexer bit à bit les signaux à débits différents en le premier signal numérique (1301, B1, X, E, D).

6 - Equipement de multiplexage conforme à la revendication 5, caractérisé en ce que l'un (D) des signaux numériques à débits différents convoie l'information de changement de fréquence de rythme, de préférence sous la forme du nombre de bits variable (N) du second signal numérique (B2) dans la trame (T), et est appliqué aux moyens pour détecter (19).

7 - Equipement de multiplexage conforme à l'une quelconque des revendications 1 à 6, caractérisé en ce que les seconds moyens pour mémoriser (1313) mémorisent des bits du second signal (B2) pendant une démi-période de trame et sont du type file FIFO ayant une capacité au moins égale à un maximum prédéterminé (10 kbits) du nombre de bits variable de second signal (B2) dans la demi-période de trame (T).

8 - Equipement de multiplexage conforme à l'une quelconque des revendications 1 à 7, caractérisé en ce qu'il comprend des moyens (1300) pour multiplexer bit à bit quatre signaux numériques (B1, X, E, D) ayant des fréquences de rythme respectives de 64, 32, 16 et 16 kHz en le premier signal numérique, et en ce que le second signal numérique (B2) a une fréquence de rythme égale à N.64 kHz, où N est un entier variable compris entre 1 et un entier maximum de préférence égal à 1250 et est inclus dans ladite information de changement de fréquence de rythme.

9 - Equipement de démultiplexage pour démultiplexer un signal numérique résultant (1RE) ayant une fréquence de rythme ((n+2)64 kHz) et structuré en trames récurrentes ayant une période prédéterminée (t) en un premier signal numérique (b1, x, e, d) ayant une première fréquence de rythme constante et un second signal numérique (b2) ayant une seconde fréquence de rythme (n64 kHz), comprenant des moyens de réception et de transcodage (16) d'un signal en ligne (21) en ledit signal résultant (1RE), des moyens (1801) pour mémoriser des bits reçus du premier signal (b1, x, e, d) inclus dans le signal résultant pendant une période de trame (t), des moyens (1805) pour écrire les bits reçus du premier signal dans les moyens pour mémoriser au rythme de la fréquence ((n+2)64 kHz) du signal résultant, des moyens (1807) pour lire les bits écrits du premier signal à la première fréquence (128 kHz), et des moyens (1804, 1805) pour extraire les bits reçus du second signal (b2) inclus dans le signal résultant et les retransmettre à la seconde fréquence de rythme, caractérisé en ce que le premier signal numérique (b1, x, e, d) convoie une information (n) de changement de fréquence de rythme du second signal numérique (b2), en ce que chaque trame (t) du signal résultant (1RE) comprend un nombre de bits constant du premier signal numérique (b1, x, e, d) égal au produit constant de la première fréquence de rythme (128 kHz) par la période de trame (t = 250 μs) quelle que soit la fréquence de rythme variable (n.64 kHz) du second signal numérique (b2), et un nombre de bits variable du second signal numérique (b2) égal au produit de la seconde fréquence de rythme variable (n64) kHz) par la période de trame (t = 250 μs), la fréquence de rythme ((n+2)64 kHz) du signal résultant étant variable et égale à la somme de la première fréquence de rythme constante (128 kHz) et de la seconde fréquence de rythme variable (n64 kHz), et en ce que l'équipement de démultiplexage comprend des moyens (19) pour détecter l'information de changement de fréquence de rythme (n), des moyens (17) programmables en fonction de l'information de changement de fréquence de rythme détectée (n) pour produire au moins un signal d'horloge (fj) à la fréquence de rythme variable du signal résultant ((n+2)64 kHz) à appliquer aux moyens pour écrire (1805) et aux moyens pour extraire (1804, 1805) et un signal d'horloge (f1) correspondant à une rapidité de modulation variable (Ω(n+2)64 kHz) du signal en ligne (21) à appliquer aux moyens de réception et de transcodage (16).

10 - Equipement de démultiplexage conforme à la revendication 9, caractérisé en ce que chaque trame (t) du signal résultant (21) contient un nombre prédéterminé de premiers champs (xx, 8b1 ; edxxx ; edx, 8b1 ; edx ; edx) occupés par des nombres constants respectifs de bits du premier signal (b1, x, e, d), répartis à des emplacements prédéterminés dans la trame et ayant des durées variables en fonction de la fréquence de rythme variable ((n+2) 64 kHz) du signal résultant, et un nombre prédéterminé de seconds champs ((n-1)4 b2 ; (n+1)4 b2 ; (n-1)4 b2 ; (n+1)4 b2) occupés par des bits du second signal (b2), ayant des durées respectives variables en fonction de la fréquence de rythme du signal résultant, et répartis à des emplacements entre les emplacements des premiers champs.

11 - Equipement de démultiplexage conforme à la revendication 10, caractérisé en ce que les bits du premier signal (b1, x, e, d) sont distribués dans la trame (t) du signal résultant (12) selon un ordre prédéterminé différent de celui de transmission des bits dans le premier signal, et en ce que les moyens pour écrire (1805) et les premiers moyens pour lire (1807) adressent respectivement en écriture et lecture les moyens pour mémoriser (1801) par l'intermédiaire de nombres entiers ordonnés naturellement et selon l'ordre prédéterminé, ou réciproquement.

12 - Equipement de démultiplexage conforme à l'une quelconque des revendications 9 à 11, caractérisé en ce que les moyens pour mémoriser (1801) sont du type mémoire à accès aléatoire (RAM) ayant une capacité au moins égale audit nombre de bits constant du premier signal (b1, x, e, d) dans la trame (t).

13 - Equipement de démultiplexage conforme à l'une quelconque des revendications 9 à 12, caractérisé en ce qu'il comprend des moyens (1815) commandés par les moyens pour lire (1807) et recevant le premier signal numérique lu (1817 ; b1, x, e d) pour démultiplexer bit à bit des signaux numériques (b1, x, e, d) ayant des débits constants et différents entre eux.

14 - Equipement de démultiplexage conforme à la revendication 13, caractérisé en ce que l'un (d) des signaux numériques à débits différents convoie l'information de changement de fréquence de rythme, de préférence sous la forme du nombre de bits variable (n) du second signal numérique (b2) dans la trame (t), et est appliqué aux moyens pour détecter (19).

15 - Equipement de démultiplexage conforme à l'une quelconque des revendications 9 à 14, caractérisé en ce que les moyens pour extraire (1804, 1805) comprennent un convertisseur série-série (1804) recevant le signal résultant (1RE) et retransmettant le second signal (b2).

16 - Equipement de démultiplexage conforme à l'une quelconque des revendications 9 à 15, caractérisé en ce que lesdits moyens programmables pour produire des signaux d'horloge (17) comprennent un circuit à boucle de verrouillage de phase (170) incluant un diviseur de fréquence (174) programmable en fonction de l'information de changement de fréquence de rythme détectée (n).

17 - Equipement de démultiplexage conforme à l'une quelconque des revendications 9 à 16, caractérisé en ce qu'il comprend des moyens (1815) numériques (1817) pour démultiplexer bit à bit le premier signal numérique en quatre signaux numériques (b1, x, e, d) ayant des fréquences de rythme respectives de 64, 48, 16 et 16 kHz, et en ce que le second signal numérique (b2) a une fréquence de rythme égale à n.64 kHz, où n est un entier variable compris entre 1 et un entier maximum de préférence égal à 1250 et est inclus dans ladite information de changement de fréquence.

18 - Liaison numérique synchrone bidirectionnelle à débit variable entre une première station (1) et une seconde station (2), caractérisée en ce que chacune des première et seconde stations (1, 2) comprend un équipement de multiplexage (13, 14, 15, 19 ; 23, 24, 25, 29) conforme à l'une quelconque des revendications 1 à 7 et un équipement de démultiplexage (16, 17, 18, 19 ; 26, 27, 28, 29) conforme à l'une quelconque des revendications 9 à 16.

19 - Liaison conforme à la revendication 18, caractérisée en ce que la rapidité de modulation du signal de ligne (12) transmis de la première (1) vers la seconde station (2) est égale à $\Omega.(N+2).64$ kbauds, la fréquence de rythme du signal résultant (1EM) est égale à $(N+2).64$ kHz et répartie conformément à la revendication 8, la rapidité de modulation du signal de ligne (21) transmis de la seconde (2) vers la première station (1) est égale à $\Omega.(n+2).64$ kbauds, et la fréquence de rythme du signal résultant (1RE) est égale à $(n+2).64$ kHz et répartie conformément à la revendication 17, et en ce que la première station (1) est du type régie d'abonné et la seconde station (2) est du type terminal d'abonné.

## Claims

1. Multiplexing equipment for multiplexing a first digital signal (B1, X, E, D) having a first constant rhythm frequency (128 kHz) with a digital signal (B2) having a second rhythm frequency (N.64 kHz) into a resultant digital signal (1EM) having a variable rhythm frequency ((N+2) 64 kHz)) equal to the sum of said first and second rhythm frequencies and structured in recurrent frames having a predetermined period (T), comprising first means (1304) for memorizing consecutive bits of the first signal (B1, X, E, D) received during each frame period (T), first means (1302) for writing the received bits of said first signal in the first memorizing means at the rhythm of the first frequency (128 kHz), means (1307) for reading the written bits of the first signal at the rhythm frequency ((N+2) 64 kHz) of the resultant signal, second means (1313) for memorizing the bits of the second signal (B2) received during no more than one frame period (T), second means (1317) for writing the received bits of the second signal in said second memorizing means at the rhythm of the second frequency (N.64 kHz), means (1307) for reading the written bits of the second signal at the rhythm frequency ((N+2).64 kHz)) of the resultant signal, and means (15) for transmitting and transcoding the resultant signal (1EM) into a line signal (12), characterized in that the first digital signal (B1, X, E, D) carries a data (N) indicating a change in the rhythm frequency of the second digital signal (B2), in that each frame (T) of said resultant signal (12) comprises a constant number of bits of the first digital signal (B1, X, E, D) equal to the constant product of the first rhythm frequency (128 kHz) by the frame period (T = 250 µs) whatever said variable rhythm frequency (N.64 kHz) of the second digital signal (B2), and a variable number of bits of the second digital signal (B2) equal to the product of the second variable rhythm frequency (N.64 kHz) by the frame period (T = 250 µs), the rhythm frequency ((N+2).64 kHz) of the resultant signal being variable and equal to the sum of the first constant rhythm frequency (128 kHz) and of the second variable rhythm frequency (N.64 kHz), and in that the demultiplexing equipment comprises means (19) for detecting the rhythm frequency change data (N), and means (14) programmable as a function of the detected rhythm frequency change data (N) for deriving at least a clock signal (FJ) at the variable rhythm frequency of the resultant signal ((N+2).64 kHz) to be applied to the reading means (1307), and a clock signal (FL) corresponding to a variable modulation speed (Ω(N+2).64 kHz) of the line signal (12) to be applied to the transmitting and transcoding means (15).

2. Multiplexing equipment according to claim 1, characterized in that each frame (T) of the resultant signal (1EM) contains a predetermined number of first fields (XX, 8B1; EDXXX; EDX, 8B1; EDX; EDX) occupied by respective constant numbers of bits in the first signal (B1, X, E, D), distributed to predetermined locations in the frame and having variable durations as a function of the variable rhythm frequency ((N+2).64 kHz) of the resultant signal, and a predetermined number of second fields ((N−1)4 B2; (N+1)4 B2; (N−1)4 B2; (N+1)4 B2) being occupied by bits of the second signal (B2), having respective durations varying as a function of the rhythm frequency of said resultant signal, and distributed to locations between the locations of the first fields.

3. Multiplexing equipment according to claim 2, characterized in that the bits of the first signal (B1, X, E, D) are distributed in the frame (T) of the resultant signal (1EM) in a predetermined order different from that in which the bits in the received first signal appear, and in that the first writing means (1302) and the reading means (1307) respectively write and read address the first memorizing means (1304) using integers naturally ordered and according to the predetermined order, or vice-versa.

4. Multiplexing equipment according to any one of claims 1 to 3, characterized in that the first memorizing means (1304) are a type of random access memory (RAM) having a capacity at least equal to said constant number of bits of the first signal (B1, X, E, D) in the frame (T).

5. Multiplexing equipment according to any one of claims 1 to 4, characterized in that it comprises means (1300) receiving digital signals (1B1, 1X, 1E, 1D) having constant rates all different from each other and controlled by the first writing means (1302) for bit-by-bit multiplexing the different constant rate signals into the first digital signal (1301, B1, X, E, D).

6. Multiplexing equipment according to claim 5, characterized in that one (D) of the digital signals at different constant rates carries the rhythm frequency change data, preferably in the form of a variable number of bits (N) of the second digital signal (B2) in the frame (T), and is applied to the detecting means (19).

7. Multiplexing equipment according to any one of claims 1 to 6, characterized in that the second memorizing means (1313) memorize bits of the second signal (B2) during a frame half-period and are of the FIFO type having a capacity at least equal to a predetermined maximum (10 kbits) of the variable number of bits of the second signal (B2) in the frame half-period (T).

8. Multiplexing equipment according to any one of claims 1 to 7, characterized in that it comprises means (1300) for bit-by-bit multiplexing for digital signals (B1, X, E, D) having respective rhythm frequencies of 64, 32, 16 and 16 kHz into the first digital signal, and in that the second digital signal (B2) has a rhythm frequency equal to N.64 kHz, where N is a variable integer lying between 1 and a predetermined integer preferably equal to 1250 and is included in said rhythm frequency change data.

9. Demultiplexing equipment for demultiplexing a resultant digital signal (1RE) having a rhythm frequency ((n+2)64 kHz) and structured in recurrent frames having a predetermined period (t) into a first digital signal (b1, x, e, d) having a first constant rhythm frequency and a second digital signal (b2) having a second rhythm frequency (n64 kHz), comprising means (16) for receiving and transcoding a line signal (21) into said resultant signal (1RE), means (1801) for memorizing received first signal bits (b1, x, e, d) included in the resultant signal for said frame period (t), means (1805) for writing the received first signal bits in the first memorizing means at the rhythm of the resultant signal frequency ((n+2)64 kHz), means (1807) for reading the written bits of the first signal at the first frequency (128 kHz), and means (1804, 1805) for extracting received second signal bits (b2) included in the resultant signal and retransmitting them at the second rhythm frequency, characterized in that the first digital signal (b1, x, e, d) carries a data (n) of rhythm frequency change of the second digital signal (b2), in that each frame (t) of the resultant signal (1RE) comprises a constant number of bits of the first digital signal (b1, x, e, d) equal to the constant product of the first rhythm frequency (128 kHz) by the frame period (t = 250 µs) whatever the variable rhythm frequency (n.64 kHz) of the second digital signal (b2), and a variable number of bits of the second digital signal (b2) equal to the product of the second variable rhythm frequency (n64 kHz) by the frame period (t = 250 µs), the rhythm frequency ((n+2)64 kHz) of the resultant signal being variable and equal to the sum of the first constant rhythm frequency (128 kHz) and of the second variable rhythm frequency (n64 kHz), and in that the demultiplexing equipment comprises means (19) for detecting the rhythm frequency change data (n), means (17) programmable as a function of the detected rhythm frequency change data (n) for deriving at least a clock signal (fj) at the variable rhythm frequency of the resultant signal ((n+2)64 kHz) to be applied to the writing means (1805) and to the extracting means (1804, 1805), and a clock signal (f1) corresponding to a

variable modulation speed ($\Omega$(n+2)64 kHz) of the line signal (21) to be applied to the receiving and transcoding means (16).

10. Demultiplexing equipment according to claim 9, characterized in that each frame (t) of the resultant signal (21) contains in a predetermined number of first fields (xx, 8b1; edxxx; edx, 8b1; edx; edx) occupied by respective constant numbers of first signal bits (b1, x, e, d), distributed to predetermined locations in the frame, and having variable durations as a function of the variable rhythm frequency ((n+2)64 kHz) of the resultant signal, and a predetermined number of second fields ((n−1)4 b2; (n+1)4 b2; (n−1)4 b2; (n+1)4 b2) occupied by bits of said second signal (b2), having respective durations which vary as a function of the rhythm frequency of the resultant signal, and distributed at locations between the locations of the first fields.

11. Demultiplexing equipment according to claim 10, characterized in that the bits of the first signal (b1, x, e, d) are distributed in the frame (t) of the resultant signal (12) in a predetermined order different from that in which the bits in the resulting signal are transmitted, and in that the writing means (1805) and the first reading means (1807) respectively write and read address the memorizing means (1801) using integer numbers naturally ordered and according to the predetermined order, or vice-versa.

12. Demultiplexing equipment according to any one of claims 9 to 11, characterized in that the memorizing means (1801) are a type of random access memory (RAM) having a capacity at least equal to said constant number of bits of the first signal (b1, x, e, d) in the frame (t).

13. Demultiplexing equipment according to any one of claims 9 to 12, characterized in that it comprises means (1815) controlled by the reading means (1807) and receiving the read first digital signal (1817; b1, x, e, d) for bit-by-bit demultiplexing digital signals (b1, x, e, d) having constant rates different from each other.

14. Demultiplexing equipment according to claim 13, characterized in that one (d) of the digital signals at different constant rates carries the rhythm frequency rate change data, preferably in the form of a variable number of bits (n) of the second digital signal (b2) in the frame (t), and is applied to the detecting means (19).

15. Demultiplexing equipment according to any one of claims 9 to 14, characterized in that the extracting means (1804, 1805) comprise a series-to-series converter (1804) receiving the resultant signal (1RE) and retransmitting the second signal (b2).

16. Demultiplexing equipment according to any one of claims 9 to 15, characterized in that the programmable means for deriving clock signals (17) comprise a phase lock loop circuit (170) including a frequency divider (174) programmable as a function of the detected rhythm frequency change data (n).

17. Demultiplexing equipment according to any one of claims 9 to 16, characterized in that it comprises digital (1817) means (1815) for bit-by-bit demultiplexing the first digital signal into four digital signals (b1, x, e, d) having respective rhythm frequencies of 64, 48, 16 and 16 kHz, and in that the second digital signal (b2) has a rhythm frequency equal to n.64 kHz, where n is a variable integer lying between 1 and a predetermined maximum value and is included in the rhythm frequency change data.

18. Bidirectional synchronous digital link with variable rate between a first station (1) and a second station (2), characterized in that each of said first and second stations (1, 2) comprises a demultiplexing equipment (13, 14, 15, 19; 23, 24, 25, 29) according to any one of claims 1 to 7 and a demultiplexing equipment (16, 17, 18, 19; 26, 27, 28, 29) according to any one of claims 9 to 16.

19. Link according to claim 18, characterized in that the modulation speed of the line signal (12) transmitted from the first (1) to the second station (2) is equal to $\Omega$.(N+2).64 kbauds, the rhythm frequency of the resultant signal (1EM) is equal to (N+2).64 kHz and distributed according to claim 8, the modulation speed of the line signal (21) transmitted from the second (2) to said first station (1) is equal to $\Omega$.(n+2).64 kbauds, and the rhythm frequency of the resultant signal (1RE) is equal to (n+2).64 kHz and distributed according to claim 17, and in that the first station (1) is of subscriber central monitoring system type and the second station (2) is of a subscriber terminal type.

**Patentansprüche**

1. Multiplexvorrichtung für das Multiplexen eines ersten Digitalsignals (B1, X, E, D) das eine erste konstante Taktfrequenz (128 kHz) hat, mit einem Digitalsignal (B2), das eine zweite Taktfrequenz (N.64 kHz) hat, zur Bildung eines resultierenden Digitalsignals (1EM), welches eine Taktfrequenz ((N+2) 64 kHz) gleich der Summe der ersten und der zweiten Taktfrequenz hat und in sich wiederholenden Rahmen mit vorgegebener Periode (T) strukturiert ist, mit ersten Mitteln (1304) zum Speichern aufeinander folgender Bits des ersten Signals (B1, X, E, D), welche während einer Rahmenperiode (T) empfangen werden, mit ersten Mitteln (1302) zum Einschreiben der empfangenen Bits des ersten Signals in die ersten Mittel zum Abspeichern im Takt der ersten Frequenz (128 Hz), mit Mitteln (1307) zum Lesen der eingeschriebenen Bits des ersten Signals mit der Taktfrequenz ((N+2) 64 kHz) des Ergebnissignals, mit zweiten Mitteln (1313) zum Speichern der Bits des zweiten Signals (B2), welche während höchstens einer Rahmenperiode (T) empfangen worden sind, mit zweiten Mitteln (1317) zum Einschreiben der empfangenen Bits des zweiten Signals in die zweiten Mittel zum Speichern im Takt der zweiten Frequenz (N.64 kHz), mit Mitteln (1307) zum Lesen der eingeschriebenen Bits des zweiten Signals mit der Taktfrequenz ((N+2).64 kHz) des Ergebnissignals sowie mit Mitteln zur Ausgabe und Umcodierung (15) des Ergebnissignals (1EM) in den ein Leitungssignal (12), dadurch gekennzeichnet, daß das erste Digitalsignal (B1, X, E, D) eine Information (N) der Taktfrequenzänderung des zweiten Digitalsignals (B2) mitführt, daß jeder Rahmen (T) des Ergebnissignals (12) eine konstante Bit-Anzahl des ersten Digitalsignals (B1, X, E, D) gleich dem konstanten Produkt der ersten Taktfrequenz (128 kHz) mit der Rahmenperiode (T = 250 µs), welche variable Taktfrequenz (N.64 kHz) des zweiten Digitalsignals (B2) es auch immer sein mag, und eine variable Bit-Anzahl des zweiten Digitalsignals (B2) gleich dem Produkt der zweiten variablen Taktfrequenz (N.64 kHz) mit der Rahmenperiode (T = 250 µs) aufweist, wobei die Taktfrequenz ((N+2).64 kHz) des Ergebnissignals variabel und gleich der Summe aus der konstanten ersten Taktfrequenz (128 kHz) und der variablen zweiten Taktfrequenz (N.64 kHz) ist, und daß die Multiplexvorrichtung Mittel (19) zum Feststellen der Informationen der Taktfrequenzänderung (N), sowie Mittel (4) aufweist, die in Funktion der festgestellten Taktfrequenzänderungsinformation (N) programmierbar sind, um wenigstens ein Taktsignal (FJ) von variabler Taktfrequenz des Ergebnissignals ((N+2).64 kHz), welches auf die Mittel zum Lesen (1307) gegeben werden soll, sowie ein Taktsignal (FL) zu erzeugen, das einer variablen Modulationsgeschwindigkeit ((N+2).64 kHz) des Leitungssignals (12) entspricht, welches auf die Ausgabe- und Umkodierungsmittel (15) gegeben werden soll.

2. Multiplexvorrichtung nach Anspruch 1, dadurch gekennzeichnet, daß jeder Rahmen (T) des Ergebnissignals (1EM) eine vorgegebene Anzahl erster Felder (XX, 8B1; EDXXX; EDX, 8B1; EDX; EDX) enthält, welche von den jeweiligen konstanten Anzahlen der Bits des ersten Signal (B1, X, E, D) besetzt und die im Rahmen über vorbestimmte Stellen verteilt sind und Dauern besitzen, die in Funktion der variablen Taktfrequenz ((N+2).64 kHz) des Ergebnissignals variieren, sowie eine vorbestimmte Anzahl zweiter Felder ((N–1)4 B2; (N+1)4 B2; (N–1)4 B2; (N+1)4 B2) aufweist, die von den Bits des zweiten Signals (B2) besetzt sind und jeweils Dauern haben, die in Funktion der Taktfrequenz des Ergebnissignals variabel sind und über Stellen zwischen den Stellen der ersten Felder verteilt sind.

3. Multiplexvorrichtung nach Anspruch 2, dadurch gekennzeichnet, daß die Bits des ersten Signals (B1, X, E, D) in dem Rahmen (T) des Ergebnissignals (1EM) nach einer vorgegebenen Ordnung verteilt sind, die sich von der Verteilung der Bits im ersten Signal unterscheidet, und daß die ersten Mittel zum Schreiben (1302) sowie die Mittel zum Lesen (1307) die ersten Mittel zum Speichern (1304) zum Schreiben beziehungsweise zum Lesen in der Folge der natürlichen ganzen Zahlen und nach vorgegebener Ordnung oder umgekehrt adressieren.

4. Multiplexvorrichtung nach einem der Ansprüche 1 bis 3, dadurch gekennzeichnet, daß die ersten Mittel zum Speichern (1304) in der Art eines Speichers mit wahlfreiem Zugriff (RAM) mit einer Kapazität ausgeführt sind, der wenigstens gleich der konstanten Bit-Anzahl des ersten Signals (B1, X, E, D) im ersten Rahmen (T) ist.

5. Multiplexvorrichtung nach einem der Ansprüche 1 bis 4, dadurch gekennzeichnet, daß sie Mittel (1300) aufweist, die Digitalsignale (1B1, 1X, 1E, 1D) empfangen, welche konstante sowie untereinander unterschiedliche Bit-Raten haben, und von den ersten Mitteln zum Schreiben (1302) gesteuert sind, um die Signale in unterschiedlichen Bit-Raten bitweise in das erste Digitalsignal (1301, B1, X, E, D) zu multiplexieren.

6. Multiplexvorrichtung nach Anspruch 5, dadurch gekennzeichnet, daß eines (D) der Digitalsignale unterschiedlicher Bit-Raten die Information zur Änderung der Taktfrequenz mitführt, vorzugsweise in Form einer variablen Bit-Anzahl (N) des zweiten Digitalsignals (B2) in dem Rahmen (T) und auf die Mittel zur Feststellung (19) gegeben wird.

7. Multiplexvorrichtung nach einem der Ansprüche 1 bis 6, dadurch gekennzeichnet, daß die zweiten Mittel zum Speichern (1313) die Bits des zweiten Signals (B2) während einer Halbperiode des Rahmens speichern und von der Art eines Stapelspeichers FIFO sind, der eine Kapazität wenigstens gleich einem vorgegebenen Maximum (10 kbits) der variablen Bit-Anzahl des zweiten Signals (B2) in der Rahmenhalbperiode (T) besitzt.

8. Multiplexvorrichtung nach einem der Ansprüche 1 bis 7, dadurch gekennzeichnet, daß sie Mittel (1300) zum bitweisen Multiplexieren von vier Digitalsignalen (B1, X, E, D), welche Taktfrequenzen von jeweils 64, 32, 16 und 16 kHz haben, in das erste Digitalsignal aufweist, und daß das zweite Digitalsignal (B2) eine Taktfrequenz von N.64 kHz aufweist, wobei N eine variable ganze Zahl ist, die zwischen eins und einer maximalen ganzen Zahl, vorzugsweise 1250, liegt und in der Information zur Änderung der Taktfrequenz enthalten ist.

9. Demultiplexvorrichtung zum Demultiplexieren eines digitalen Ergebnissignals (1RE) mit einer Taktfrequenz ((n+2) 64 kHz) und einer wiederkehrenden Rahmenstruktur mit vorgegebener Periode (t) in ein erstes Digitalsignal (b1, x, e, d) mit konstanter erster Taktfrequenz und ein zweites Digitalsignal (b2) mit einer zweiten Taktfrequenz (n64 kHz), mit Mitteln zum Empfang und Umkodieren (16) eines Leitungssignals (21) in das Ergebnissignal (1RE) sowie mit Mitteln (1801) zum Speichern der empfangenen Bits des ersten Signals (b1, x, e, d), welche in dem Ergebnissignal während einer Rahmenperiode (t) enthalten sind, sowie mit Mitteln (1805) zum Einschreiben der empfangenen Bits des ersten Signals in die Mittel zum Speichern in Taktfrequenz ((n+2)64 kHz) des Ergebnissignals sowie mit Mitteln (1807) zum Lesen der eingeschriebenen Bits des ersten Signals mit der ersten Frequenz (128 kHz) sowie mit Mitteln (1804, 1805) zum Extrahieren der empfangenen Bits des zweiten Signals (b2), welche in dem Ergebnissignal enthalten sind und diese mit der zweiten Taktfrequenz zurückübertragen, dadurch gekennzeichnet, daß das erste Digitalsignal (b1, x, e, d) eine Information (n) der Taktfrequenzänderung des zweiten Digitalsignals (b2) mitführt, daß jeder Rahmen (t) des Ergebnissignals (1RE) eine konstante Bit-Anzahl des ersten Digitalsignals (b1, x, e, d) gleich dem konstanten Produkt der ersten Taktfrequenz (128 kHz) mit der Rahmenperiode (t = 250 µs), was auch immer die variable Taktfrequenz (n.64 kHz) des zweiten Digitalsignals (b2) sei, sowie eine variable Bit-Anzahl des zweiten Digitalsignals (b2) gleich dem Produkt der zweiten variablen Taktfrequenz (n64 kHz) mit der Rahmenperiode (t = 250 µs) aufweist, wobei die Taktfrequenz ((n+2)64 kHz) des Ergebnissignals variabel und gleich der Summe der konstanten ersten Taktfrequenz (128 kHz) und der zweiten variablen Taktfrequenz (n.64 kHz) ist, und daß die Demultiplexvorrichtung Mittel (19) zum Feststellen der Information der Taktfrequenzänderung (n), sowie Mittel (17), welche in Funktion der festgestellten Information der Taktfrequenzänderung (n) programmierbar sind, aufweist, um wenigstens ein Taktsignal (fj) von variabler Taktfrequenz des Ergebnissignals ((n+2)64 kHz) zur Weiterleitung an die Mittel zum Einschreiben (1805) und an die Mittel zum Extrahieren (1804, 1805) und ein Taktsignal (fl), welches einer Geschwindigkeit der variablen Modulation ((n+2)64 kHz) des Leitungssignals (21) entspricht, zur Weiterleitung an die Empfangs- und Umkodierungsmittel (16) zu erzeugen.

10. Demultiplexvorrichtung nach Anspruch 9, dadurch gekennzeichnet, daß jeder Rahmen (t) des Ergebnissignals (21) eine vorbestimmte Anzahl erster Felder (xx, 8b1; edxxx; edx, 8b1; edx; edx) aufweist, welche von den jeweiligen konstanten Anzahlen der Bits des ersten Signals (b1, x, e, d), verteilt über vorgegebene Stellen in dem Rahmen und mit variablen Dauern in Funktion der variablen Taktfrequenz ((n+2)64 kHz) des Ergebnissignals besetzt sind, sowie eine vorbestimmte Zahl zweiter Felder ((n−1)4 b2; (n+1)4 b2; (n−1)4 b2; (n+1)4 b2) aufweist, welche von Bits des zweiten Signals (b2) besetzt sind und Dauern haben, die jeweils in Funktion der Taktfrequenz des Ergebnissignals variieren und an Stellen zwischen den Stellen der ersten Felder verteilt sind.

11. Demultiplexvorrichtung nach Anspruch 10, dadurch gekennzeichnet, daß die Bits des ersten Signals (b1, x, e, d) in dem Rahmen (t) des Ergebnissignals (12) nach einer vorgegebenen Ordnung verteilt sind, die sich von derjenigen der Übertragung der Bits im ersten Signal unterscheidet, und daß die Mittel zum Einschreiben (1805) und die ersten Mittel zum Lesen (1807) die Mittel zum Speichern (1801) jeweils zum Einschreiben und Lesen mittels der natürlich geordneten ganzen Zahlen und nach einer vorgegebenen Ordnung oder umgekehrt, adressieren.

12. Demultiplexvorrichtung nach einem der Ansprüche 9 bis 11, dadurch gekennzeichnet, daß die Mittel zum Einspeichern (1801) von der Art eines Speichers mit wahlfreiem Zugriff (RAM) mit einer Kapazität sind, die wenigstens gleich der konstanten Bit-Anzahl des ersten Signals (b1, x, e, d) im Rahmen (t) ist.

13. Demultiplexvorrichtung nach einem der Ansprüche 9 bis 12, dadurch gekennzeichnet, daß sie Mittel (1815) aufweist, welche von den Mitteln zum Lesen (1807) gesteuert sind und das erste gelesene Digitalsignal (1817; b1, x, e, d) zum bitweisen Demultiplexen von Digitalsignalen (b1, x, e, d) empfangen, die konstante und untereinander unterschiedliche Bit-Raten besitzen.

14. Demultiplexvorrichtung nach Anspruch 13, dadurch gekennzeichnet, daß eines (d) der Digitalsignale von unterschiedlichen Bit-Raten eine Information der Taktfrequenzänderung, vorzugsweise in Form einer variablen Bit-Anzahl (n) des zweiten Digitalsignals (b2) in dem Rahmen (t), zur Weiterleitung an die Mittel zur Feststellung (19) mitführt.

15. Demultiplexvorrichtung nach einem der Ansprüche 9 bis 14, dadurch gekennzeichnet, daß die Mittel zum Extrahieren (1804, 1805) einen Serien-Serien-Umsetzer (1804) aufweisen, der das Ergebnissignal (1RE) empfängt und das zweite Signal (b2) zurücküberträgt.

16. Demultiplexvorrichtung nach einem der Ansprüche 9 bis 15, dadurch gekennzeichnet, daß die programmierbaren Mittel zum Erzeugen des Taktsignals (17) eine Phasenerkennungs-Schleifenschaltung (170) aufweisen, welche einen Frequenzteiler (174) enthält, der in Funktion der festgestellten Information der Taktfrequenzänderung (n) programmierbar ist.

17. Demultiplexvorrichtung nach einem der Ansprüche 9 bis 16, dadurch gekennzeichnet, daß sie digitale (1817) Mittel (1815) zum bitweisen Demultiplexen des ersten Digitalsignals in vier Digitalsignalen (b1, x, e, d) aufweist, welche jeweils Taktfrequenzen von 64, 48, 16 und 16 kHz besitzen, und daß das zweite Digitalsignal (b2) eine Taktfrequenz von n.64 kHz aufweist, wobei n eine variable ganze Zahl ist, die zwischen 1 und einer maximalen ganzen Zahl von vorzugsweise gleich 1250 ist und in der Information der Frequenzänderung enthalten ist.

18. Synchrone bidirektionelle digitale Verbindung mit variabler Bitrate zwischen einer ersten Station (1) und einer zweiten Station (2), dadurch gekennzeichnet, daß jede der ersten und zweiten Stationen (1, 2) eine Multiplexvorrichtung (13, 14, 15, 19; 23, 24, 25, 29) nach einem der Ansprüche 1 bis 7 und eine Demultiplexvorrichtung (16, 17, 18, 19; 26, 27, 28, 29) nach einem der Ansprüche 9 bis 16 aufweist.

19. Verbindung nach Anspruch 18, dadurch gekennzeichnet, daß die Modulationsgeschwindigkeit des Leitungssignals (12), welches von der ersten (1) zur zweiten Station (2) übertragen ist, gleich Ω.(N+2).64 kbaud ist, wobei die Taktfrequenz des Ergebnissignals (1EM) gleich (N+2).64 kHz ist und nach Anspruch 8 aufgeteilt ist, und wobei die Modulationsgeschwindigkeit des Leitungssignals (21), das von der zweiten (2) zur ersten Station (1) übertragen wird gleich Ω.(n+2).64 kbaud ist, wobei die Taktfrequenz des Ergebnissignals (1RE) gleich (n+2).64 kHz ist und nach Anspruch 17 verteilt ist, und daß die erste Station (1) von der Art einer Teilnehmerverwaltung und die zweite Station (2) von der Art eines Teilnehmer-Terminals ist.

FIG.1

FIG.2

# FIG.3

EP 0 218 499 B1

# FIG. 4

FT (4 kHz)

MULTIPL. 1301 128 k bit/s
| B1 | D | B1 | X | B1 | E | B1 | X | B1 | D | B1 | X | B1 | E | B1 | X | B1 | D | B1 | X | B1 | E | B1 | X | B1 | D | B1 | X | B1 | E | B1 | X |

BUS 1306 écriture
| 21 | 12 | 22 | 18 | 23 | 11 | 24 | 29 | 25 | 17 | 26 | 32 | 3 | 16 | 4 | 1 | 5 | 28 | 6 | 2 | 7 | 27 | 8 | 13 | 9 | 31 | 10 | 14 | 19 | 30 | 20 | 15 |

BUS 1308 lecture
1 à 10    11 à 15    16 à 26    27 à 29    30 à 32

FIL 1314

FIL 1310
1 2 3 4 5 6 7 8 9 10   11 12 13 14 15   16 17 18 19 20 21 22 23 24 25 26   27 28 29   30 31 32

(N–1) 4 bits    8+(N–1) 4 bits    (N–1) 4 bits    8+(N–1) 4 bits

JONCTION 1EM 384 k bit/s
| X X | 8 bits ; B1 | 3.4 bits ; B2 | E D X X X | 5.4 bits ; B2 | E D X | 8 bits ; B1 | 3.4 bits ; B2 | E D X | 5.4 bits ; B2 | E D X |

S1 (24 bits)    S2    S3    S4

TRAME T = 250 µs ; 96 bits ; N = 4

FIL 1326

5    6    7    8    1    2    3    4

BUS 1322 lecture

BUS 1321 écriture

FIL 1SY2

FIL 1F2

FIL 1B2

1    2    3    4    5    6    7    8

EP 0 218 499 B1

FIG.5

# FIG. 6

### BASE DE TEMPS PROGRAMMABLE 14

HREF

FT

140

$\div$

141

HORLOGE
PROGRAMMABLE
$\Omega \cdot (N+2)\ 64\,kHz$

142

$\div\ \Omega$

143

FT    FB1 FD FX FI

190    N

FL    FJ

# FIG. 7

### RECUPERATEUR D'HORLOGE PROGRAMMABLE 17

Fj

$Fl = \Omega(n+2)\ 64\,kHz$

160

177

170

171    172
N/A

175    174    173
$\div\ \Omega$    $\not\!\!Z$    VCO

n    190

# FIG. 8

MULTIPLEXEUR PROGRAMMABLE 13

EP 0 218 499 B1

# FIG.9

DEMULTIPLEXEUR PROGRAMMABLE 18

EP 0 218 499 B1